# EUROPÄISCHE PATENTSCHRIFT

(11) **EP 4 072 977 B1**
(45) Veröffentlichungstag und Bekanntmachung des Hinweises auf die Patenterteilung: **15.05.2024**
(21) Anmeldenummer: 20838329.9
(22) Anmeldetag: 07.12.2020
(51) Int. Cl.: B65G 43/08, G05B 1/00, G06Q 10/00, G06Q 10/08

(54) **LAGER- UND KOMMISSIONIERSYSTEM UND VERFAHREN ZUM PROGNOSTIZIEREN UND/ODER ABWENDEN EINER ZUKÜNFTIGEN STÖRUNG**
STORAGE AND PICKING SYSTEM AND METHOD FOR PREDICTING AND/OR AVERTING A FUTURE DISRUPTION
SYSTÈME DE STOCKAGE ET DE PRÉLÈVEMENT ET PROCÉDÉ DE PRÉDICTION ET/OU DE PRÉVENTION DE DYSFONCTIONNEMENT FUTUR

(30) Priorität: 13.12.2019 AT 510892019
(43) Veröffentlichungstag der Anmeldung: 19.10.2022
(73) Patentinhaber: TGW Logistics Group GmbH, 4614 Marchtrenk (AT)
(72) Erfinder: GAGGL, Markus, 4052 Ansfelden (AT)
(74) Vertreter: Burger, Hannes
(86) Internationale Anmeldenummer: PCT/AT2020/060436
(87) Internationale Veröffentlichungsnummer: WO 2021/113886

(56) Entgegenhaltungen:
- EP-A1- 3 147 841
- US-A1- 2018 224 837
- US-B1- 10 402 774

## Beschreibung

Es wird ein Verfahren zum Betrieb eines Lager- und Kommissioniersystems angegeben, bei dem Stückgut-Eigenschaften eines mit einer Fördertechnik des Lager- und Kommissioniersystems zu transportierenden Stückguts mit einer Stückgut-Messeinrichtung des Lager- und Kommissioniersystems ermittelt werden, die ermittelten Stückgut-Eigenschaften in einem dem Stückgut zugeordneten Datenspeicher gespeichert werden und das Stückgut mit der Fördertechnik des Lager- und Kommissioniersystems transportiert wird.

Weiterhin wird ein Lager- und Kommissioniersystem angegeben, das eine Fördertechnik zum Transport eines Stückguts umfasst, eine Stückgut-Messeinrichtung zum Ermitteln von Stückgut-Eigenschaften des Stückguts, sowie eine Schreibeinrichtung zum Speichern der Stückgut-Eigenschaften in einem dem Stückgut zugeordneten Datenspeicher und eine Leseeinrichtung zum Auslesen der Stückgut-Eigenschaften aus dem Datenspeicher oder eine kombinierte Schreib- und Leseeinrichtung zum Speichern der Stückgut-Eigenschaften in einem dem Stückgut zugeordneten Datenspeicher und zum Auslesen der Stückgut-Eigenschaften aus dem Datenspeicher.

Ein solches Verfahren und ein solches Lager- und Kommissioniersystem sind aus dem Stand der Technik grundsätzlich bekannt. Dabei werden Stückgut-Eigenschaften wie zum Beispiel dessen Abmessungen erfasst und für den späteren Gebrauch gespeichert.

Bekannt sind insbesondere auch Verfahren und Lager- und Kommissioniersysteme, bei denen die Abweichung des Stückguts von einer Quaderform von einer Stückgut-Messeinrichtung ermittelt wird und durch die Stückgut-Messeinrichtung oder einer damit verbundenen Bewertungseinheit eine Klassifizierung betreffend die Fördereigenschaften vorgenommen wird, zum Beispiel: "nicht förderbar", "förderbar", "schlecht förderbar", "gut förderbar". In Folge werden Maßnahmen ergriffen, um beispielsweise nicht oder schlecht förderbare Stückgüter förderbar zu machen, beispielsweise durch Umpacken von Waren.

Die US 2018/0224837 A1 offenbart in diesem Zusammenhang ein Verfahren zum Sortieren von Stückgütern in einem Lager- und Kommissioniersystem, umfassend die Schritte:
a) Ermitteln von Stückgut-Eigenschaften (Gewichts- oder Abmessungsabweichungen) eines mit einer Fördertechnik des Lager- und Kommissioniersystems zu transportierenden Stückguts mit einer Stückgut-Messeinrichtung des Lager- und Kommissioniersystems,
b) Ausgabe einer Wahrscheinlichkeit für das Auftreten einer Störung basierend auf den ermittelten Stückgut-Eigenschaften mit einer Ausgabeeinheit des Lager- und Kommissioniersystems und Einleiten einer Maßnahme (Aussortieren des Stückguts), welche die Wahrscheinlichkeit für das Auftreten dieser Störung verringert, mit einer Steuerung des Lager- und Kommissioniersystems, wenn das Auftreten einer Störung wahrscheinlich ist, basierend auf den ermittelten Stückgut-Eigenschaften,
c) Speichern der ermittelten Stückgut-Eigenschaften in einem dem Stückgut zugeordneten Datenspeicher,
d) Transportieren des Stückguts mit der Fördertechnik des Lager- und Kommissioniersystems.

Das Lager- und Kommissioniersystem umfasst miteinander verbundene Förderer mit mehreren Sensoren, die physikalische Ist-Eigenschaften der auf den Förderern transportierten Stückgüter erfassen. Die von den Sensoren erfassten physikalischen Ist-Eigenschaften werden mit physikalischen Soll-Eigenschaften, die in einer Datenbank gespeichert sind, verglichen. Weichen die Ist-Eigenschaften von den Soll-Eigenschaften ab, wird ein Fehlersignal erzeugt, woraufhin die betreffenden Stückgüter umgeleitet werden.

Nachteilig an den bekannten Verfahren und Lager- und Kommissioniersystemen ist, dass die Klassifizierung nach einem mehr oder minder starren Schema erfolgt und unbekannte Störeinflüsse auf der Fördertechnik (basierend auf einer Wechselwirkung zwischen der Fördertechnik und dem Stückgut), welche die Förderung der Stückgüter nachteilig beeinflusst, unberücksichtigt bleiben.

Eine Aufgabe der Erfindung ist es daher, ein verbessertes Verfahren zum Betrieb eines Lager- und Kommissioniersystems sowie ein verbessertes Lager- und Kommissioniersystem anzugeben. Insbesondere sollen unbekannte Störeinflüsse auf der Fördertechnik, welche die Förderung der Stückgüter nachteilig beeinflusst, berücksichtigt werden.

Die Aufgabe der Erfindung wird mit einem Verfahren zum Prognostizieren und/oder Abwenden einer zukünftigen Störung in einem Lager- und Kommissioniersystem gelöst, umfassend die Schritte:
a) Ermitteln von Stückgut-Eigenschaften eines mit einer Fördertechnik des Lager- und Kommissioniersystems zu transportierenden Stückguts mit einer Stückgut-Messeinrichtung des Lager- und Kommissioniersystems,
b) Ausgabe einer Wahrscheinlichkeit für das Auftreten einer Störung (das heißt das Abgeben einer Prognose für das Auftreten einer Störung) mit einer Ausgabeeinheit des Lager- und Kommissioniersystems und/oder Einleiten einer Maßnahme, welche die Wahrscheinlichkeit für das Auftreten dieser Störung verringert, mit einer Steuerung des Lager- und Kommissioniersystems, wenn das Auftreten einer Störung wahrscheinlich ist, wobei die genannte Wahrscheinlichkeit jeweils auf den Stückgut-Eigenschaften des geförderten Stückguts basiert,
c) Speichern der ermittelten Stückgut-Eigenschaften in einem dem Stückgut zugeordneten Datenspeicher,
d) Transportieren des Stückguts mit der Fördertechnik des Lager- und Kommissioniersystems,
e) Klassifizieren des Transports dieses Stückguts durch eine Überwachungs- und Klassifizierungseinheit des Lager- und Kommissioniersystems als gestört, wenn eine Störung beim Transport dieses Stückguts durch die Überwachungs- und Klassifizierungseinheit festgestellt wird, oder Klassifizieren des Transports durch die Überwachungs- und Klassifizierungseinheit als störungsfrei, wenn innerhalb eines vorgebbaren Beobachtungszeitraums keine Störung beim Transport dieses Stückguts durch die Überwachungs- und Klassifizierungseinheit festgestellt wird,
f) Einspeisen der gespeicherten Stückgut-Eigenschaften und der im Schritt e) ermittelten Transport-Klassifizierung des Transports des Stückguts in einen lernfähigen Algorithmus, und
g) Wiederholen der Schritte a) bis f) für eine Vielzahl von Stückgütern und Berechnen einer Wahrscheinlichkeit für das Auftreten einer Störung beim Transport der verschiedenen Stückgüter (kurz "Störungs-Wahrscheinlichkeit"), für welche die Schritte a) bis f) durchlaufen werden, in Abhängigkeit von deren Stückgut-Eigenschaften mit Hilfe des lernfähigen Algorithmus.

Die Aufgabe der Erfindung wird auch mit einem Lager- und Kommissioniersystem gelöst, umfassend
- eine Fördertechnik zum Transport eines Stückguts,
- eine Stückgut-Messeinrichtung zum Ermitteln von Stückgut-Eigenschaften des Stückguts,
- eine Schreibeinrichtung zum Speichern der Stückgut-Eigenschaften in einem dem Stückgut zugeordneten Datenspeicher und eine Leseeinrichtung zum Auslesen der Stückgut-Eigenschaften aus dem Datenspeicher oder eine kombinierte Schreib- und Leseeinrichtung zum Speichern der Stückgut-Eigenschaften in einem dem Stückgut zugeordneten Datenspeicher und zum Auslesen der Stückgut-Eigenschaften aus dem Datenspeicher,
- eine Ausgabeeinheit zum Ausgeben einer Wahrscheinlichkeit für das Auftreten einer Störung (das heißt das Abgeben einer Prognose für das Auftreten einer Störung) basierend auf den ermittelten Stückgut-Eigenschaften und/oder eine Steuerung zum Einleiten einer Maßnahme, welche die Wahrscheinlichkeit für das Auftreten dieser Störung verringert, wenn das Auftreten einer Störung wahrscheinlich ist, basierend auf den ermittelten Stückgut-Eigenschaften,
- eine Überwachungs- und Klassifizierungseinheit, welche dazu eingerichtet ist, eine Störung beim Transport des Stückguts festzustellen und dann den Transport des Stückguts als gestört zu klassifizieren oder den Transport als störungsfrei zu klassifizieren, wenn innerhalb eines vorgebbaren Beobachtungszeitraums keine Störung beim Transport dieses Stückguts durch die Überwachungs- und Klassifizierungseinheit festgestellt wurde, und
- einen lernfähigen Algorithmus, in welchen gespeicherte Stückgut-Eigenschaften und eine Transport-Klassifizierung des Transports des Stückguts einspeisbar sind, und welcher zum Berechnen einer Wahrscheinlichkeit für das Auftreten einer Störung beim Transport verschiedener Stückgüter (kurz "Störungs-Wahrscheinlichkeit") in Abhängigkeit von deren Stückgut-Eigenschaften ausgebildet ist.

Durch die vorgeschlagenen Maßnahmen werden Störungen, die ein Stückgut auf der Fördertechnik des Lager- und Kommissioniersystems verursacht, auf dessen Stückgut-Eigenschaften zurückgeführt beziehungsweise diesen zugeordnet. Durch Sammeln der betreffenden Informationen für eine Vielzahl an Stückgütern kann ein "Muster" für das Auftreten von Störungen erkannt werden (sofern ein solches vorliegt). Sobald dieses Wissen aus Erfahrung vorliegt, können Störungen prognostiziert werden, und es kann eine Wahrscheinlichkeit dafür ermittelt und angezeigt werden. Es können auch Gegenmaßnahmen eingeleitet werden, um das tatsächliche Auftreten der prognostizierten Störung zu vermeiden. Auf diese Weise können insbesondere negative Einflüsse auf das Lager- und Kommissioniersystem durch bestimmte Stückgüter, die im Planungsstadium des Lager- und Kommissioniersystems nicht berücksichtigt worden sind oder nicht berücksichtigt werden konnten, nachträglich erkannt werden.

Ein "lernfähiger Algorithmus" generiert Wissen aus Erfahrung und lernt dazu aus Beispielen und kann diese nach Beendigung der Lernphase verallgemeinern. Im Rahmen der Lernphase baut der lernfähige Algorithmus ein statistisches Modell auf, das auf Trainingsdaten beruht. Beispiele für lernfähige Algorithmen sind beispielsweise künstliche neuronale Netze, selbstlernende Entscheidungsbäume sowie genetische Algorithmen. Die beschriebene Vorgangsweise ist auch unter dem Begriff "maschinelles Lernen" bekannt. Im Rahmen der Erfindung kann die Lern- oder Trainingsphase insbesondere ganz oder teilweise im laufenden Betrieb des Lager- und Kommissioniersystems erfolgen.

Die "Wahrscheinlichkeit für das Auftreten einer Störung beim Transport eines Stückguts", kurz "Störungs-Wahrscheinlichkeit", gibt insbesondere an, wie viele Stückgüter aus einer Gruppe von Stückgütern mit denselben (oder ähnlichen Stückgut-Eigenschaften) eine Störung hervorrufen. Eine Störungs-Wahrscheinlichkeit von 10% bedeutet also, dass 1 von 10 Stückgütern dieser Gruppe eine Störung im Lager- und Kommissioniersystem verursacht. Betrachtet man ein einzelnes Stückgut, so bedeutet diese Angabe auch, dass mit 90-prozentiger Wahrscheinlichkeit keine Störung verursacht wird. Bei 50% Störungs-Wahrscheinlichkeit halten sich jene Stückgüter, die eine Störung verursachen, und jene Stückgüter, die keine Störung verursachen, die Waage. Auch wenn die Angabe der Störungs-Wahrscheinlichkeit auf der oben angegebenen Basis von Vorteil ist, ist es dennoch denkbar, die Störungs-Wahrscheinlichkeit auf einer anderen Grundlage anzugeben.

Unter einem zu fördernden oder geförderten "Stückgut" kann im Rahmen der Erfindung insbesondere eine einzelne Ware verstanden werden, ein Verbund mehrerer einzelner Waren oder ein Ladehilfsmittel, in dem eine Waren oder mehrere Waren (lose oder im Verbund) aufgenommen werden.

Ein "Ladehilfsmittel" dient der Aufnahme von Ware(n). Insbesondere können unter Ladehilfsmittel Behälter, Kartons und dergleichen verstanden werden. Nach der obigen Definition kann ein Stückgut auch durch ein Ladehilfsmittel gebildet sein.

In einem "Lager- und Kommissioniersystem" können Waren zum Beispiel an einem Wareneingang angeliefert und übernommen werden und sodann gegebenenfalls umgepackt und in einem Warenlager eingelagert werden. Die Waren können auch gemäß einem Auftrag kommissioniert werden, das heißt aus dem Warenlager ausgelagert, zu einem Auftrag zusammengestellt und am Warenausgang zum Abtransport bereitgestellt werden. Die Waren werden zwischen Wareneingang und Warenausgang nicht substantiell verändert, ganz im Gegensatz zu einem Herstellungsprozess. Eine geringe Formänderung ist aber möglich, insbesondere bei nicht starren Körpern wie zum Beispiel Beuteln oder Säcken oder aber auch bei anderen nachgiebigen Verpackungen, etwa aus Karton oder Kunststoff.

Die "Fördertechnik" des Lager- und Kommissioniersystems dient allgemein dem Transport von Stückgütern. Stückgüter können insbesondere Ladehilfsmittel mit und ohne Waren und/oder (ohne Ladehilfsmittel transportierte) Waren umfassen. Insbesondere kann die Fördertechnik in unterschiedliche, funktionale Bereiche gegliedert werden, beispielsweise eine "Einlagerfördertechnik", die zum Transport von Waren vom Wareneingang in einen Lagerbereich dient, und eine "Auslagerfördertechnik", die zum Transport von Waren vom Lagerbereich zur Kommissionierstation dient. Die Fördertechnik kann weiterhin technologisch in "ortsfeste Fördertechnik" und "automatisiert betriebene Förderfahrzeuge" unterteilt werden.

"Ortsfeste Fördertechnik" benötigt zum Warentransport fix verbaute Einrichtungen. Unter ortsfester Fördertechnik sind insbesondere Rollenförderer, Bandförderer, Kettenförderer, Vertikallifte und dergleichen zu verstehen. Unter ortsfester Fördertechnik ist auch eine Hängefördervorrichtung zu verstehen, welche Hängetaschen zur Aufnahme von Stückgütern (bevorzugt je Hängetasche ein Stückgut) umfasst.

Unter "automatisiert betriebenen Förderfahrzeugen" sind im Rahmen der Erfindung selbstfahrende fahrerlose Förderfahrzeuge beziehungsweise autonome Flurförderfahrzeuge zu verstehen.

Ein "Regalbediengerät" ist ein automatisiert betriebenes Förderfahrzeug, das auf Schienen fährt und als Einebenen-Regalbediengerät (auch "Shuttle" genannt) oder als Mehrebenen-Regalbediengerät ausgeführt sein kann. Wegen der fix verbauten Schienen, auf dem ein Regalbediengerät fährt, wird es im Rahmen der Erfindung der ortsfesten Fördertechnik zugerechnet.

Ein Lager- und Kommissioniersystem kann ortsfeste Fördertechnik und automatisiert betriebene Förderfahrzeuge aufweisen. Die Schritte a) bis g) können daher auf ortsfeste Fördertechnik und automatisiert betriebene Förderfahrzeuge gemeinsam bezogen sein, nur auf ortsfeste Fördertechnik oder nur auf automatisiert betriebene Förderfahrzeuge.

Das "Transportieren" des Stückguts mit der Fördertechnik des Lager- und Kommissioniersystems kann insbesondere den Transportvorgang mit der Fördertechnik und den Ein- und Auslagervorgang in einen und aus einem Lagerbereich umfassen. Die Fördertechnik kann insbesondere eine Transportfläche umfassen, welche das Stückgut transportiert, oder insbesondere ein Transportmittel (beispielweise Hängetasche) umfassen, welches das Stückgut in einem Aufbewahrungsraum aufnehmen und mit diesem transportieren kann.

Eine "Stückgut-Messeinrichtung" des Lager- und Kommissioniersystems dient der Erfassung von Eigenschaften eines Stückguts. Die Stückgut-Eigenschaften können insbesondere eine oder mehrere Eigenschaften aus der Gruppe: Gewicht des Stückguts, Abmessungen des Stückguts, Abweichung des Stückguts von einer Soll-Form (insbesondere Quaderform), Oberflächenbeschaffenheit des Stückguts umfassen.

Unter den Abmessungen des Stückguts können dessen Länge, Breite, Höhe, Oberfläche oder Volumen verstanden werden. Die Abweichung des Stückguts von einer (Quader)form (das heißt eine Formabweichung respektive Deformation) kann insbesondere durch eine Ausbeulung (die Ist-Form des Stückguts ragt über die Soll-Form hinaus) oder eine Einbuchtung (die Ist-Form des Stückguts weicht nach innen von der Soll-Form ab) gegeben sein. Die Ausbeulung/Einbuchtung kann beispielsweise durch den (maximalen) Normalabstand der Ausbeulung/Einbuchtung zur Soll-Form, durch eine von der Soll-Form abweichende Fläche, durch ein zwischen Ausbeulung/Einbuchtung und Soll-Form eingeschlossenes Volumen oder durch eine Maßzahl angegeben sein, die von einer der angegebenen Größen oder aus einer Kombination dieser Größen abgeleitet ist. Beispielsweise kann die Maßzahl ein (dimensionsloses) Verhältnis zwischen der oben angegebenen Fläche und der Oberfläche der Soll-Form oder ein (dimensionsloses) Verhältnis zwischen dem oben angegebenen Volumen und dem Volumen der Soll-Form sein. Die Abweichung des Stückguts von einer (Quader)form kann auch die Position der Abweichung am Stückgut beinhalten, zum Beispiel, "oben", "unten", "links", "rechts", "vorne", "hinten". Die Oberflächenbeschaffenheit kann insbesondere ein Reibwert der Oberfläche des Stückguts sein. Die Oberflächenbeschaffenheit kann aber beispielsweise auch ein Feuchtigkeitswert des Stückguts sein, insbesondere wenn dieser an der Oberfläche hygroskopisch ist (und dort zum Beispiel aus Karton oder Holz besteht).

Häufig wird durch die Stückgut-Messeinrichtung oder einer damit verbundenen Bewertungseinheit nach dem Stand der Technik eine Klassifizierung betreffend die Fördereigenschaften vorgenommen, zum Beispiel, "nicht förderbar", "förderbar", "schlecht förderbar", "gut förderbar". Diese Fördereigenschaften können für die Zwecke dieser Offenbarung ebenfalls als Stückgut-Eigenschaften aufgefasst werden, auch wenn sie streng genommen das Zusammenspiel zwischen einem Stückgut und der Fördertechnik beschreiben. Unter einer solchen Stückgut-Messeinrichtung kann insbesondere eine bereits nach dem Stand der Technik eingesetzte Stückgut-Messeinrichtung verstanden werden, die im Speziellen die Abweichung des Stückguts von einer Soll-Form ermittelt und daraus eine Fördereigenschaft ableitet.

Eine "Ausgabeeinheit" des Lager- und Kommissioniersystems kann insbesondere eine Anzeige und/oder einen Lautsprecher umfassen. Die Wahrscheinlichkeit für das Auftreten einer Störung kann zum Beispiel auf nummerischer Basis erfolgen (z.B. "Störungs-Wahrscheinlichkeit = 30%") oder auch textbasiert sein (z.B. "Störungs-Wahrscheinlichkeit ist hoch"). Zudem kann eine Empfehlung zur Vermeidung einer Störung abgegeben werden (z.B. "Umpacken des Stückguts empfohlen"). Die "Ausgabeeinheit" ist aber keinesfalls zwingend erforderlich, sondern optional zu verstehen.

Eine "Steuerung" des Lager- und Kommissioniersystems dient der Steuerung von Aktoren (insbesondere der Steuerung der Fördertechnik), der Verarbeitung von Messwerten des Lager- und Kommissioniersystems und/oder der Ausführung von Befehlen, die von einem Betreiber des Lager- und Kommissioniersystems erhalten werden. Eine "Steuerung" des Lager- und Kommissioniersystems dient insbesondere der Abwicklung eines Einlagerprozesses von Stückgütern sowie eines Auslagerprozesses zu einem Kommissionierauftrag.

Der "Datenspeicher" kann beispielsweise in der Steuerung des Lager- und Kommissioniersystems integriert sein. Der Datenspeicher kann aber auch direkt auf dem Stückgut angebracht oder Teil desselben sein, beispielweise in Form eines RFID-Tags, auf dem Stückgut-Eigenschaften speicherbar sind.

Die "Überwachungs- und Klassifizierungseinheit" des Lager- und Kommissioniersystems dient dem Überwachen des Transports eines Stückguts, wenn dieses durch die Fördertechnik und/oder auf der Fördertechnik des Lager- und Kommissioniersystems transportiert wird, und zur Ermittlung einer Transport-Klassifizierung und kann beispielsweise einen Rechner oder einen Logikkreis sowie daran angeschlossene Kameras, Scanner und andere Sensoren zur Überwachung der Fördertechnik umfassen. Eine Überwachungs- und Klassifizierungseinheit kann insbesondere auch QR-Codes, Barcodes und/oder RFID-Tags lesen, die auf einem Stückgut oder auch auf der Fördertechnik angebracht sind. Insbesondere kann die Überwachungs- und Klassifizierungseinheit eine "mobile Datenerfassungseinheit" umfassen. Mit QR-Codes, Barcodes und/oder RFID-Tags auf einem Stückgut kann das Stückgut identifiziert werden, mit QR-Codes, Barcodes und/oder RFID-Tags auf der Fördertechnik kann ein Ort (insbesondere ein Störungs-Ort) auf der Fördertechnik identifiziert werden.

Eine "Transport-Klassifizierung" gibt an, ob der Transport eines Stückguts durch das Lager- und Kommissioniersystem eine Störung hervorgerufen hat oder nicht. Insbesondere kann die Transport-Klassifizierung die Werte "Transportstörung" und "keine Transportstörung" annehmen. Selbstverständlich ist auch eine genauere Klassifizierung der Störung denkbar, zum Beispiel "Stückgut verklemmt", "Stückgut umgefallen", "Stückgut von Fördertechnik gefallen" und so weiter.

Der "Beobachtungszeitraum" ist jene Zeitspanne, innerhalb welcher der Transport eines Stückguts durch eine Überwachungs- und Klassifizierungseinheit überwacht und klassifiziert wird. Insbesondere kann der Beobachtungszeitraum explizit angegeben werden, das heißt durch eine konkrete Zeitangabe (zum Beispiel acht Stunden, zwei Tage, drei Wochen) oder implizit durch ein vorgegebenes Ereignis bestimmt werden. Ein solches Ereignis kann das Passieren eines bestimmten Punkts auf der Fördertechnik oder das Verlassen der Fördertechnik sein. Demgemäß wird der Transport durch die Überwachungs- und Klassifizierungseinheit als störungsfrei klassifiziert, wenn das Stückgut die Fördertechnik ordnungsgemäß passiert oder verlässt und bis zu diesem Zeitpunkt keine Störung beim Transport dieses Stückguts durch die Überwachungs- und Klassifizierungseinheit festgestellt wird.

Weiterte vorteilhafte Ausgestaltungen und Weiterbildungen der Erfindung ergeben sich nun aus den Unteransprüchen sowie aus der Beschreibung in Zusammenschau mit den Figuren.

Günstig ist es, wenn der Schritt b) erst nach einer (vorgebbaren) Vielzahl von Durchläufen der Schritte a) und c) bis f) ausgeführt wird. Durch diese Maßnahme wird sichergestellt, dass die dem Schritt b) zugrunde gelegte Störungs-Wahrscheinlichkeit auf einer hinreichend großen Anzahl bewerteter Stückgüter basiert. Insbesondere kann diese Maßnahme getroffen werden, wenn vor dem Schritt a) keine hinreichend lange Trainings- oder Lernphase (beispielsweise außerhalb des laufenden Betriebs des Lager- und Kommissioniersystems) erfolgt ist.

Besonders vorteilhaft ist es, wenn das Stückgut ein mit Waren beladenes Ladehilfsmittel ist und die im Schritt b) eingeleitete Maßnahme darin besteht, die im Ladehilfsmittel enthaltenen Waren (an einer Umladestation des Lager- und Kommissioniersystems) in ein anderes Ladehilfsmittel umzuladen oder eine solche Umladung einzuleiten und in Folge mit dem Schritt a) fortzusetzen oder das andere Ladehilfsmittel ohne Durchlauf der Schritte a) bis g) auf der Fördertechnik des Lager- und Kommissioniersystems zu transportieren. Das heißt, das Lager- und Kommissioniersystem umfasst eine Umladestation zum Umladen von Waren aus einem Ladehilfsmittel in ein anderes Ladehilfsmittel. Wenn das transportierte Stückgut ein mit Waren beladenes Ladehilfsmittel ist, dann kann eine prognostizierte Störung dadurch abgewendet werden, dass die im Ladehilfsmittel enthaltenen Waren in ein anderes Ladehilfsmittel umgeladen werden, für welches das Auftreten einer Störung weniger wahrscheinlich ist. Kann das Ladehilfsmittel, in das die Waren umgeladen wurden, a priori als in Ordnung eingestuft werden, dann kann dieses ohne Durchlauf der Schritte a) bis g) mit der Fördertechnik des Lager- und Kommissioniersystems transportiert werden. Kann vom ordnungsgemäßen Zustand des Ladehilfsmittels nicht a priori ausgegangen werden, dann kann mit dem Schritt a) fortgesetzt werden. Die Umladung der Waren von einem Ladehilfsmittel auf ein anderes kann manuell (und angeleitet von der Steuerung des Lager- und Kommissioniersystems) oder automatisch (basierend auf Befehlen von der Steuerung des Lager- und Kommissioniersystems) oder kombiniert manuell und automatisch erfolgen.

Vorteilhaft ist es weiterhin, wenn ein Störungs-Ort, an dem eine Störung auftritt, im Schritt e) (von der Überwachungs- und Klassifizierungseinheit) erfasst wird, im Schritt f) in den lernfähigen Algorithmus eingespeist wird und in den Schritten b) und g) dahingehend berücksichtigt wird, dass die Störungs-Wahrscheinlichkeit für das Auftreten einer Störung beim Transport der Stückgüter in Abhängigkeit von den Stückgut-Eigenschaften eines Stückguts und in Abhängigkeit vom Störungs-Ort angegeben wird. Dadurch können Orte im Lager- und Kommissioniersystem, die für bestimmte Klassen von Stückgut-Eigenschaften kritisch sind, das heißt an denen beim Transport dieser Stückgüter häufig Störungen auftreten, identifiziert werden.

Besonders vorteilhaft ist es zudem, wenn die im Schritt b) eingeleitete Maßnahme darin besteht, das Stückgut unter Umgehung des prognostizierten Störungs-Orts auf der Fördertechnik des Lager- und Kommissioniersystems zu transportieren, insbesondere dann oder nur dann, wenn eine Störungs-Wahrscheinlichkeit bei Umgehung des prognostizierten Störungs-Orts geringer ausfällt. Diese Möglichkeit eröffnet sich im Speziellen dann, wenn für das Stückgut mehrere Transportwege innerhalb des Lager- und Kommissioniersystems wahlfrei zur Verfügung stehen. Beispielsweise kann vorgesehen sein, das Stückgut in jenen Lagerbereich einzulagern, bei dem Störungen während des Einlagervorgangs (und gegebenenfalls auch Auslagervorgangs) weniger oder am wenigsten wahrscheinlich sind. Es kann auch vorgesehen sein, dass das Stückgut über jene Transportroute zu einem bestimmten Ziel transportiert wird, für die Störungen während des Transports weniger oder am wenigsten wahrscheinlich sind. Auch ist denkbar, dass ein Kommissioniervorgang, bei dem das Stückgut als Quell-Ladehilfsmittel fungiert, manuell erfolgt, wenn für einen alternativen automatischen Kommissioniervorgang eine Störung wahrscheinlich ist, und umgekehrt.

Besonders vorteilhaft ist es auch, wenn das Stückgut ein mit Waren beladenes Ladehilfsmittel ist und die im Schritt b) eingeleitete Maßnahme darin besteht,
i) das Stückgut unter Umgehung des prognostizierten Störungs-Orts auf der Fördertechnik des Lager- und Kommissioniersystems zu transportieren, wenn dies möglich ist, oder
ii) die im Ladehilfsmittel enthaltenen Waren (an der Umladestation des Lager- und Kommissioniersystems) in ein anderes Ladehilfsmittel umzuladen und in Folge mit dem Schritt a) fortzusetzen oder das andere Ladehilfsmittel ohne Durchlauf der Schritte a) bis g) auf der Fördertechnik des Lager- und Kommissioniersystems zu transportieren, wenn der Schritt i) nicht möglich ist.

Bei dieser Variante wird ein (zeitaufwändiger) Umladevorgang nach Möglichkeit vermieden, nämlich dann, wann eine prognostizierte Störung dadurch abgewendet werden kann, dass das Stückgut unter Umgehung des prognostizierten Störungs-Orts auf der Fördertechnik des Lager- und Kommissioniersystems transportiert werden kann. Gegebenenfalls kann der Schritt ii) auch dann ausgeführt werden, wenn Schritt i) zwar grundsätzlich möglich wäre, die dadurch erzielbare Reduktion der Störungs-Wahrscheinlichkeit jedoch gering ausfällt, insbesondere geringer als die durch Schritt ii) erzielbare Reduktion der Störungs-Wahrscheinlichkeit.

Besonders vorteilhaft ist es darüber hinaus, wenn die im Schritt b) eingeleitete Maßnahme darin besteht, einen Betriebsparameter der Fördertechnik am prognostizierten Störungs-Ort zu ändern, insbesondere dann oder nur dann, wenn eine Störungs-Wahrscheinlichkeit bei Änderung der Betriebsparameter am prognostizierten Störungs-Ort geringer ausfällt. Diese Möglichkeit eröffnet sich im Speziellen dann, wenn am prognostizierten Störungs-Ort einstellbare Betriebsparameter für die Fördertechnik zur Verfügung stehen. Ein "Betriebsparameter" ist eine für die Fördertechnik einstellbare Stellgröße zur Beeinflussung des Betriebs der Fördertechnik. Unter einem "Betriebsparameter" kann beispielsweise eine Förder-Geschwindigkeit auf der Fördertechnik und/oder eine Beschleunigung auf der Fördertechnik verstanden werden. Beispielsweise wäre vorstellbar, eine Förder-Geschwindigkeit und/oder eine Beschleunigung beim Fördern des Stückguts am prognostizierten Störungs-Ort zu verringern.

Besonders vorteilhaft ist es auch, wenn das Stückgut ein mit Waren beladenes Ladehilfsmittel ist und die im Schritt b) eingeleitete Maßnahme darin besteht,
i) einen Betriebsparameter der Fördertechnik am prognostizierten Störungs-Ort zu ändern, wenn dies möglich ist, oder
ii) die im Ladehilfsmittel enthaltenen Waren (an der Umladestation des Lager- und Kommissioniersystems) in ein anderes Ladehilfsmittel umzuladen und in Folge mit dem Schritt a) fortzusetzen oder das andere Ladehilfsmittel ohne Durchlauf der Schritte a) bis g) auf der Fördertechnik des Lager- und Kommissioniersystems zu transportieren, wenn der Schritt i) nicht möglich ist.

Bei dieser Variante wird ein (zeitaufwändiger) Umladevorgang nach Möglichkeit wiederum vermieden, nämlich dann, wann eine prognostizierte Störung durch Änderung eines Betriebsparameters der Fördertechnik am prognostizierten Störungs-Ort abgewendet werden kann. Gegebenenfalls kann der Schritt ii) auch dann ausgeführt werden, wenn Schritt i) zwar grundsätzlich möglich wäre, die dadurch erzielbare Reduktion der Störungs-Wahrscheinlichkeit jedoch gering ausfällt, insbesondere geringer als die durch Schritt ii) erzielbare Reduktion der Störungs-Wahrscheinlichkeit.

Überaus vorteilhaft ist es weiterhin, wenn das Stückgut ein mit Waren beladenes Ladehilfsmittel ist und die im Schritt b) eingeleitete Maßnahme darin besteht,
i) das Stückgut unter Umgehung des prognostizierten Störungs-Orts auf der Fördertechnik des Lager- und Kommissioniersystems zu transportieren, wenn dies möglich ist, oder
ii) einen Betriebsparameter der Fördertechnik am prognostizierten Störungs-Ort zu ändern, wenn dies möglich ist, oder
iii) die im Ladehilfsmittel enthaltenen Waren (an der Umladestation des Lager- und Kommissioniersystems) in ein anderes Ladehilfsmittel umzuladen und in Folge mit dem Schritt a) fortzusetzen oder das andere Ladehilfsmittel ohne Durchlauf der Schritte a) bis g) auf der Fördertechnik des Lager- und Kommissioniersystems zu transportieren, wenn der Schritt i) oder der Schritt ii) nicht möglich ist.

Bei dieser Variante wird ein (zeitaufwändiger) Umladevorgang nach Möglichkeit ebenfalls vermieden, nämlich dann, wann eine prognostizierte Störung dadurch abgewendet werden kann, dass das Stückgut unter Umgehung des prognostizierten Störungs-Orts auf der Fördertechnik des Lager- und Kommissioniersystems transportiert werden kann oder durch Änderung eines Betriebsparameters der Fördertechnik am prognostizierten Störungs-Orts. Gegebenenfalls kann der Schritt iii) auch dann ausgeführt werden, wenn Schritt i) oder Schritt ii) zwar grundsätzlich möglich wäre, die dadurch erzielbare Reduktion der Störungs-Wahrscheinlichkeit jedoch gering ausfällt, insbesondere geringer als die durch die Schritt i) und ii) erzielbare Reduktion der Störungs-Wahrscheinlichkeit. Für die Schritte i) und ii) kann eine fixe Priorisierung vorgenommen werden (also Schritt ii) nur dann ausführen, wenn Schritt i) nicht möglich ist oder umgekehrt) oder ein Priorisierung nach der erzielbaren Reduktion der Störungs-Wahrscheinlichkeit (also jenen der Schritte i) oder ii) ausführen, für den die höchste Reduktion der Störungs-Wahrscheinlichkeit erzielbar ist).

Vorteilhaft ist es darüber hinaus, wenn der Schritt f) (und gegebenenfalls auch der Schritt e)) für jene Stückgüter übersprungen wird, für welche die im Schritt b) eingeleitete Maßnahme darin besteht, das Stückgut unter Umgehung des prognostizierten Störungs-Orts auf der Fördertechnik des Lager- und Kommissioniersystems zu transportieren oder für welche die im Schritt b) eingeleitete Maßnahme darin besteht, einen Betriebsparameter der Fördertechnik am prognostizierten Störungs-Orts zu ändern. Dadurch wird vermieden, dass der selbstlernende Algorithmus irrtümlicherweise davon ausgeht, dass ein kritisches Stückgut, das einen aktiven Eingriff zur Störungsvermeidung verursacht hat, grundsätzlich unkritisch ist, weil es ja keine tatsächlichen Störung verursacht (was aber im aktiven Eingriff zur Störungsvermeidung begründet ist). Beispielsweise können die betreffenden Stückgüter mit einem "Flag" markiert und vom Lernprozess ausgeschlossen werden. Für den selbstlernenden Algorithmus sind sie dann praktisch inexistent, so wie das auch beim Umladen der Waren von einem Ladehilfsmittel in ein anderes der Fall ist. Hier wird das die Störung (voraussichtlich) verursachende Stückgut (auch physisch) verworfen und taucht im weiteren Ablauf daher nicht mehr auf.

Günstig ist es weiterhin, wenn ein Betriebszustand der Fördertechnik am Störungs-Ort im Schritt e) erfasst wird, im Schritt f) in den lernfähigen Algorithmus eingespeist wird und in den Schritten b) und g) dahingehend berücksichtigt wird, dass die Störungs-Wahrscheinlichkeit für das Auftreten einer Störung beim Transport der Stückgüter in Abhängigkeit von den Stückgut-Eigenschaften eines Stückguts, in Abhängigkeit vom Störungs-Ort und in Abhängigkeit vom Betriebszustand am Störungs-Ort angegeben wird. Dadurch kann ein Betriebszustand an einem Störungs-Ort, der für bestimmte Klassen von Stückgut-Eigenschaften kritisch ist, das heißt bei denen beim Transport dieser Stückgüter häufig Störungen auftreten, identifiziert werden. Ein "Betriebszustand" der Fördertechnik ist insbesondere auch das Ergebnis vorgegebener Betriebsparameter. Zum Beispiel können auf die Belastung der Fördertechnik bezogene Werte vorgesehen sein, wie etwa "Leerlauf", "Teillastbetrieb" oder "Volllastbetrieb", oder auf eine Störung bezogene Werte, wie etwa "Normalbetrieb" oder "Störbetrieb". Selbstverständlich kann der Betriebszustand auch näher charakterisierende Werte annehmen und insbesondere eine Störung näher beschreiben. Beispielsweise kann der genannte "Betriebszustand" durch Vibrationen eines Fördermittels charakterisiert sein oder diese beschreiben, etwa wenn bei einem bewegten Bauteil des Fördermittels ein Lagerschaden aufgetreten ist. Zum Beispiel wäre vorstellbar, dass leichte Stückgüter statistisch gesehen häufig von einem Vertikalheber fallen, dessen Führungssystem nicht mehr einwandfrei funktioniert und an dem daher verstärkte Vibrationen auftreten.

Vorteilhaft ist es weiterhin, wenn eine Umgehung des prognostizierten Störungs-Orts auf der Fördertechnik des Lager- und Kommissioniersystems beim Transport des Stückguts oder eine Änderung eines Betriebsparameters der Fördertechnik am prognostizierten Störungs-Orts nur dann eingeleitet wird, wenn für den am prognostizierten Störungs-Ort vorliegenden Betriebszustand eine Störung wahrscheinlich ist. Diese Variante berücksichtigt, dass sich Betriebszustände der Fördertechnik im Laufe der Zeit ändern können. Insbesondere betrifft dieser Fall Reparaturen an der Fördertechnik, nach welchen sich der Betriebszustand schlagartig zum Positiven verändern kann. Beispielsweise kann ein Störungs-Ort für bestimmte Klassen von Stückgut-Eigenschaften nach einer Reparatur plötzlich unkritisch sein, wodurch eine Umleitung von Stückgütern oder ein Eingreifen in die Betriebsparameter vermieden werden können. Insbesondere ist diese Variante auch auf die weiter oben genannten Schritte i), ii) und iii) anwendbar, wobei dabei der Betriebszustand am Störungs-Ort berücksichtigt wird. Ein Beispiel wäre die Reparatur des defekten Führungssystems des oben angesprochenen Vertikalhebers, wodurch zukünftig übermäßige Vibrationen vermieden werden können. Auch leichte Stückgüter würden dann statistisch gesehen nicht mehr häufig (oder gar nicht mehr) unbeabsichtigt vom Vertikalheber fallen.

Günstig ist es zudem, wenn eine ab dem Zeitpunkt der Übergabe des Stückguts auf die Fördertechnik bis zum Auftreten einer Störung verstrichene Störungs-Zeit (gegebenenfalls abzüglich einer Zeitspanne, in der das Stückgut in einem Lagerbereich des Lager- und Kommissioniersystems eingelagert war) und/oder ein vom Stückgut auf der Fördertechnik bis zum Auftreten einer Störung zurückgelegter Störungs-Weg im Schritt e) (von der Überwachungs- und Klassifizierungseinheit) erfasst wird, im Schritt f) in den lernfähigen Algorithmus eingespeist wird und in den Schritten b) und g) dahingehend berücksichtigt wird, dass die Störungs-Wahrscheinlichkeit für das Auftreten einer Störung beim Transport der Stückgüter in Abhängigkeit von den Stückgut-Eigenschaften eines Stückguts und in Abhängigkeit von der Störungs-Zeit und/oder dem Störungs-Weg angegeben wird. Dadurch kann festgestellt werden, ob das Auftreten von Störungen nach einer bestimmten Verweilzeit der Stückgüter auf der Fördertechnik oder nach Zurücklegen eines bestimmten Wegs auf der Fördertechnik wahrscheinlicher wird und daher vorteilhaft Schritt b) ausgeführt werden sollte. Der angesprochene Weg kann insbesondere (nur) die zurückgelegte Wegstrecke betreffen oder auch Routeninformationen beinhalten. Beispielsweise sind Störungen eher zu erwarten, wenn das Stückgut häufig Orte passiert hat, an denen Änderungen der Stückgut-Eigenschaften zu befürchten sind. Beispielweise könnte das Passieren von Ein- und Ausschleusern zu einer nachteiligen Deformierung des Stückguts führen.

Günstig ist es aber auch, wenn die Schritte b), e), f) und g) unabhängig von einer ab dem Zeitpunkt der Übergabe des Stückguts auf die Fördertechnik bis zum Auftreten einer Störung verstrichenen Störungs-Zeit (gegebenenfalls abzüglich einer Zeitspanne, in der das Stückgut in einem Lager des Lager- und Kommissioniersystems eingelagert war) und/oder unabhängig von einem vom Stückgut auf der Fördertechnik bis zum Auftreten einer Störung zurückgelegten Störungs-Weg ausgeführt werden. Untersuchungen haben gezeigt, dass Störungen häufig zeitnah nach der Übergabe eines Stückguts auf die Fördertechnik des Lager- und Kommissioniersystems auftreten und danach weniger wahrscheinlich auftreten. Bei dieser Variante wird auf die Berücksichtigung der Störungs-Zeit und/oder des Störungs-Wegs zugunsten eines vereinfachten Aufbaus des lernfähigen Algorithmus verzichtet.

Günstig ist es darüber hinaus, wenn die Schritte a) bis g) für ein und dasselbe Stückgut mehrmals durchlaufen werden. Dadurch können Änderungen der Stückgut-Eigenschaften, die im Laufe der Zeit auftreten, berücksichtigt werden.

Günstig ist es zudem, wenn eine auf der Wahrscheinlichkeit für das Auftreten einer Störung basierende Maßnahme in Schritt b) eingeleitet wird, wenn die besagte Störungs-Wahrscheinlichkeit über einem vorgebbaren Schwellwert liegt. Auf diese Weise kann gesteuert werden, wie empfindlich das Lager- und Kommissioniersystem auf prognostizierte Störungen reagiert. Beispielsweise kann eine auf der Störungs-Wahrscheinlichkeit für das Auftreten einer Störung basierende Maßnahme in Schritt b) eingeleitet werden, wenn die besagte Störungs-Wahrscheinlichkeit über 10% liegt, über 20% oder über einem anderen vorgebbaren Wert. Zusätzlich kann vorgesehen sein, dass die Konfidenz (das heißt die Sicherheit oder Verlässlichkeit der vom lernfähigen Algorithmus ausgegebenen Störungs-Wahrscheinlichkeit) für das Einleiten einer auf der Störungs-Wahrscheinlichkeit basierenden Maßnahme in Schritt b) über einem zweiten Schwellwert liegen muss. Das heißt, es kann vorgesehen sein, dass die in Schritt b) vorgesehene Maßnahme nur dann eingeleitet wird, wenn die vom lernfähigen Algorithmus ausgegebene Störungs-Wahrscheinlichkeit einen verlässlichen (das heißt, einigerma-ßen gesicherten) Wert darstellt.

In einer weiteren vorteilhaften Variante des vorgestellten Verfahrens ist vorgesehen, dass die Überwachungs- und Klassifizierungseinheit
- die dem Stückgut zugeordneten Stückgut-Eigenschaften aus dem auf dem Stückgut angeordneten Datenspeicher ausliest und die Stückgut-Eigenschaften gemeinsam mit der im Schritt e) ermittelten Transport-Klassifizierung an den lernfähigen Algorithmus übermittelt, oder
- eine auf dem Stückgut angeordnete Identifikation (z.B. einen QR-Code, Barcode oder RFID-Tag) ermittelt, die der Identifikation zugeordneten Stückgut-Eigenschaften aus dem Datenspeicher ausliest und die Stückgut-Eigenschaften gemeinsam mit der im Schritt e) ermittelten Transport-Klassifizierung an den lernfähigen Algorithmus übermittelt.

Demgemäß ist die Überwachungs- und Klassifizierungseinheit des Lager- und Kommissioniersystems dazu eingerichtet,
- die dem Stückgut zugeordneten Stückgut-Eigenschaften aus dem auf dem Stückgut angeordneten Datenspeicher auszulesen und die Stückgut-Eigenschaften gemeinsam mit der Transport-Klassifizierung an den lernfähigen Algorithmus zu übermitteln, oder
- eine auf dem Stückgut angeordnete Identifikation (z.B. einen QR-Code, Barcode oder RFID-Tag) zu ermitteln, die der Identifikation zugeordneten Stückgut-Eigenschaften aus dem Datenspeicher auszulesen und die Stückgut-Eigenschaften gemeinsam mit der Transport-Klassifizierung an den lernfähigen Algorithmus zu übermitteln.

Die Zuordnung der Stückgut-Eigenschaften zu einem Stückgut kann also direkt erfolgen, indem auf dem Stückgut ein Datenspeicher angeordnet wird, auf welchem die von der Stückgut-Messeinrichtung ermittelten Stückgut-Eigenschaften gespeichert werden. Die Zuordnung der Stückgut-Eigenschaften zu einem Stückgut kann aber auch indirekt über eine auf dem Stückgut angeordnete Identifikation erfolgen. Das heißt, über die Identifikation wird das Stückgut identifiziert, und über die Identifikation wird auf die im Datenspeicher zu diesem Stückgut hinterlegten Daten zugegriffen. Mit anderen Worten kann jener Speicherplatz im Datenspeicher aufgefunden werden, an dem die von der Stückgut-Messeinrichtung ermittelten Stückgut-Eigenschaften gespeichert werden. Datenspeicher für Stückgut-Eigenschaften mehrerer Stückgüter können insbesondere auch als "Datenbanken" aufgefasst werden.

In einer weiteren vorteilhaften Variante des vorgestellten Verfahrens ist vorgesehen, dass die dem Stückgut zugeordneten Stückgut-Eigenschaften aus dem auf dem Stückgut angeordneten Datenspeicher durch eine mobile Datenerfassungseinheit der Überwachungs- und Klassifizierungseinheit ausgelesen oder die auf dem Stückgut angeordnete Identifikation (z.B. ein QR-Code, Barcode oder RFID-Tag) durch eine mobile Datenerfassungseinheit der Überwachungs- und Klassifizierungseinheit ermittelt wird. Demgemäß umfasst die Überwachungs- und Klassifizierungseinheit des Lager- und Kommissioniersystems eine mobile Datenerfassungseinheit, welche dazu eingerichtet ist, die dem Stückgut zugeordneten Stückgut-Eigenschaften aus dem auf dem Stückgut angeordneten Datenspeicher auszulesen oder die auf dem Stückgut angeordnete Identifikation (z.B. ein QR-Code, Barcode oder RFID-Tag) zu ermitteln. Bei dieser Ausführungsvariante umfasst die Überwachungs- und Klassifizierungseinheit auch eine mobile (tragbare) Datenerfassungseinheit (zum Beispiel einen Tablet-Computer), mit dem das eine Störung verursachende Stückgut identifiziert werden kann oder mit dem die dem Stückgut zugeordneten Stückgut-Eigenschaften ausgelesen werden können. Vorteilhaft können auf diese Weise auch Stückgüter erreicht werden, die sich außerhalb eines Erfassungsbereichs von fix installierten Kameras, Scannern und andere Sensoren der Überwachungs- und Klassifizierungseinheit befinden.

Von Vorteil ist es weiterhin, wenn
- das Lager- und Kommissioniersystem einen Lagerbereich mit Lagerplätzen zum Lagern von Stückgütern umfasst,
- die Stückgut-Messeinrichtung im Verlauf der Fördertechnik angeordnet ist und die Fördertechnik die Umladestation mit dem Lagerbereich fördertechnisch verbindet, und
- die Fördertechnik eine Umlenkvorrichtung aufweist, welche dazu eingerichtet ist, die Stückgüter abhängig von der Wahrscheinlichkeit für das Auftreten einer Störung direkt zum Lagerbereich oder zur Umladestation zu transportieren.

Mit Hilfe der Umlenkvorrichtung können Stückgüter abhängig von der Störungs-Wahrscheinlichkeit zur Umladestation transportiert werden. Die Umlenkvorrichtung kann ein durch die Steuerung betätigbares Umlenkmittel umfassen, beispielweise einen Schieber (Pusher), eine Röllchenweiche, einen Riemenumsetzer und dergleichen. Die Fördertechnik kann die Umlenkvorrichtung umfassen.

An dieser Stelle wird angemerkt, dass sich die zum vorgestellten Verfahren offenbarten Varianten und Vorteile gleichermaßen auf das vorgestellte Lager- und Kommissioniersystem beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: ein beispielhaftes, schematisch dargestelltes Lager- und Kommissioniersystem in Draufsicht;
- Fig. 2: eine detaillierte Seitenansicht einer schematisch dargestellten Stückgut-Messeinrichtung;
- Fig. 3: ein Blockschaltbild der Steuer- und Rechnerarchitektur des Lager- und Kommissioniersystems mit besonderem Bezug auf die Lernphase des lernfähigen Algorithmus;
- Fig. 4: ein Blockschaltbild der Steuer- und Rechnerarchitektur des Lager- und Kommissioniersystems mit besonderem Bezug auf die Betriebsphase des lernfähigen Algorithmus;
- Fig. 5: ein Blockschaltbild der Steuer- und Rechnerarchitektur mit einer mobilen Datenerfassungseinheit und
- Fig. 6: eine beispielhafte, graphische Darstellung eines Ablaufs des vorgestellten Verfahrens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

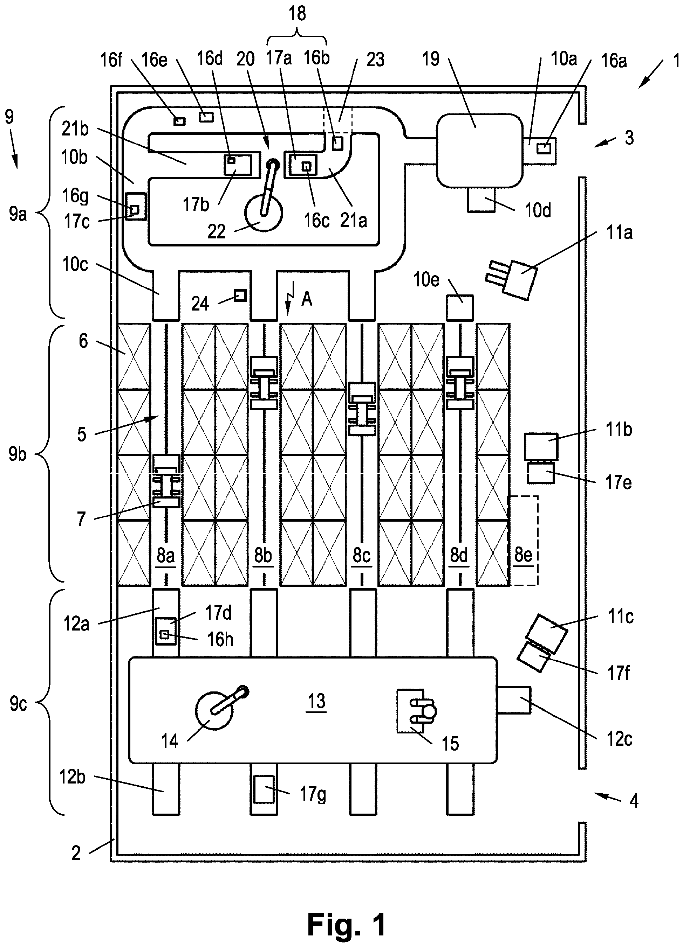

Fig. 1 zeigt ein beispielhaftes Lager- und Kommissioniersystem 1, welches ein Gebäude 2 umfasst, dass einen Wareneingang 3 sowie einen Warenausgang 4 aufweist. Das Lager- und Kommissioniersystem 1 umfasst weiterhin ein Warenlager 5 mit Lagerregalen 6 sowie zwischen den Lagerregalen 6 verfahrenden Regalbediengeräten 7. Das Warenlager 5 ist in diesem Beispiel in mehrere Lagerbereiche 8a..8e unterteilt. In den Lagerbereichen 8a..8d sind Lagerregale 6 angeordnet, wohingegen der Lagerbereich 8e durch einen Abstellbereich am Boden gebildet ist. Das Lager- und Kommissioniersystem 1 umfasst darüber hinaus eine Fördertechnik 9, welche das Warenlager 5 mit dem Wareneingang 3 und dem Warenausgang 4 verbindet. Die Fördertechnik 9 ist in diesem Beispiel in eine Einlagerfördertechnik 9a, eine Lagerfördertechnik 9b und eine Auslagerfördertechnik 9c gegliedert.

Die Einlagerfördertechnik 9a umfasst in diesem Beispiel mehrere Einlager-Abschnitte 10a..10e. Der erste Einlager-Abschnitt 10a verbindet den Wareneingang 3 mit dem zweiten Einlager-Abschnitt 10b, der hier ringförmig beziehungsweise als "Loop" ausgebildet ist. Vom zweiten Einlager-Abschnitt 10b führen mehrere dritte Einlager-Abschnitte 10c zu den Regalbediengeräten 7 und verbinden somit den zweiten Einlager-Abschnitt 10b mit dem Warenlager 5. Der vierte Einlager-Abschnitt 10d ist (nicht sichtbar) mit dem ersten Einlager-Abschnitt 10a verbunden, und der fünfte Einlager-Abschnitt 10e ist im Bereich des ganz rechten Regalbediengeräts 7 angeordnet. Der erste Einlager-Abschnitt 10a, der vierte Einlager-Abschnitt 10d und der fünfte Einlager-Abschnitt 10e bilden zudem Transferstationen für autonome Flurförderfahrzeuge 11a..11c.

Die Lagerfördertechnik 9b umfasst im Wesentlichen die Regalbediengeräte 7, kann aber auch weitere Förderer im Bereich des Warenlagers 5 umfassen, wie zum Beispiel Vertikalförderer und Horizontalförderer im Bereich der Lagerregale 6.

Die Auslagerfördertechnik 9c umfasst in diesem Beispiel drei Auslager-Abschnitte 12a..12c. Ein erster Auslager-Abschnitt 12a verbindet das Warenlager 5 mit einem Kommissionierbereich 13, und ein zweiter Auslager-Abschnitt 12b verbindet den Kommissionierbereich 13 mit dem Warenausgang 4. Ein dritter Auslager-Abschnitt 12c bildet wiederum eine Transferstation für die autonome Flurförderfahrzeuge 11a..11c, welcher hier mit dem Kommissionierbereich 13 verbunden ist. An den Transferstationen können Stückgüter 18 von der ortsfesten Fördertechnik auf die autonome Flurförderfahrzeuge 1 1a.. 1 1c übergeben werden und umgekehrt. Die autonome Flurförderfahrzeuge 11a..11c können Stückgüter 18, das heißt Waren16a..16h oder Ladehilfsmittel17 a..17 g mit Waren16a..16h, zwischen den Transferstationen befördern, das heißt zwischen dem ersten Einlager-Abschnitt 10a, dem vierten Einlager-Abschnitt 10d, dem fünften Einlager-Abschnitt 10e und dem dritten Auslager-Abschnitt 12c.

Der Kommissionierbereich 13 ist in der Fig. 1 nicht im Detail dargestellt und umfasst im gezeigten Beispiel optionale, automatische Kommissionierstationen 14, optionale, manuelle Kommissionierstationen 15 (beides symbolhaft dargestellt), sowie eine interne, nicht dargestellte Fördertechnik 9.

Die Einlager-Abschnitte 10a..10e, die Regalbediengeräte 7 sowie die Auslager-Abschnitte 12a..12c sind Teil der ortsfesten Fördertechnik 9. Die autonomen Flurförderfahrzeuge 11a..11c sind mobil und daher sowohl Teil der Einlagerfördertechnik 9a und der Auslagerfördertechnik 9c. Zudem sind sie auch Teil der Lagerfördertechnik 9b, weil sie auf Lagerplätze im Lagerbereich 8e direkt zugreifen können.

In den Lagerregalen 6 und im Lagerbereich 8e können Waren 16a..16h direkt oder mithilfe von Ladehilfsmitteln 17a..17g gelagert sein. Desgleichen können Waren 16a..16h direkt oder mithilfe von Ladehilfsmitteln 17a..17g auf der Fördertechnik 9 und mit Hilfe der autonomen Flurförderfahrzeuge 11a..11c transportiert werden. Die Ladehilfsmittel 17a..17g können dabei insbesondere als Tablare, Kartons oder Behälter mit festem Boden und Seitenwänden ausgeführt sein. Ladehilfsmittel 17a..17g sowie Waren 16a..16h, die ohne Ladehilfsmittel 17a..17g transportiert und gelagert werden, bilden im Rahmen dieser Offenbarung allgemein Stückgüter 18. In der Fig. 1 sind nur die Ware 16a und das Ladehilfsmittel 17b explizit als Stückgut 18 bezeichnet. Selbstverständlich gilt diese Zuordnung aber auch für die übrigen Waren 16b..16h und Ladehilfsmittel 17a, 17c..17g.

Im Bereich der Fördertechnik 9, insbesondere im Bereich der Einlager-Fördertechnik, beispielsweise im Bereich des ersten Einlager-Abschnitts 10a, befindet sich eine Stückgut-Messeinrichtung 19 zum Ermitteln von Stückgut-Eigenschaften a eines Stückguts 18, die später näher erläutert wird.

Weiterhin umfasst die Einlagerfördertechnik 9a eine Umladestation 20 mit einem Zuförder-Abschnitt 21a, einem Umladeroboter 22 und einem Abförder-Abschnitt 21b. Im Bereich des zweiten Einlager-Abschnitts 10b ist eine Umlenkvorrichtung 23 angeordnet, mit deren Hilfe die Stückgüter 18 wahlweise auf dem "Loop" weiterbefördert werden oder in die Umladestation 20 umgelenkt werden. Die Umladestation 20 wird ebenfalls später näher erläutert.

Die Umlenkvorrichtung 23 umfasst ein Umlenkmittel beziehungsweise eine Ausschleusvorrichtung, beispielsweise eine Röllchenweiche, einen Riemenumsetzer oder einen Schieber (Pusher), das beziehungsweise die ihrerseits von der Steuerung 35 (wie nachfolgend beschrieben) angesteuert wird. Die Fördertechnik 9 kann die Umlenkvorrichtung umfassen.

Schließlich ist in der Fig. 1 auch eine auf der Fördertechnik 9 angebrachte oder eine zumindest der Fördertechnik 9 zugeordnete Positionsmarke 24 dargestellt. Konkret befindet sich diese an einem Störungs-Ort A, dessen Bedeutung ebenfalls später im Detail erläutert wird.

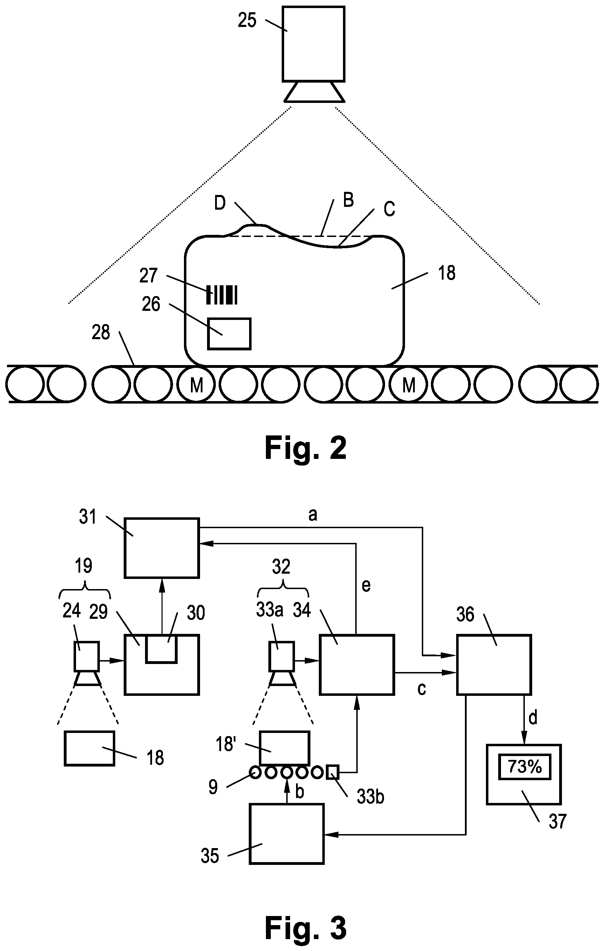

Die Fig. 2 zeigt eine beispielhafte Stückgut-Messeinrichtung 19 nun im Detail. Konkret umfasst diese im gezeigten Beispiel einen Laser-Scanner 25. Denkbar wäre aber auch, dass die Stückgut-Messeinrichtung 19 eine Kamera (insbesondere eine 3D-Kamera) oder andere Sensoren zur Erfassung von Stückgut-Eigenschaften a umfasst. Im Bereich der Stückgut-Messeinrichtung 19 befindet sich ein Stückgut 18, welches idealerweise eine Soll-Form B (hier eine Quaderform mit abgerundeten Ecken) aufweist. Tatsächlich weist das Stückgut 18 aber auch eine unter die Soll-Form B reichende Einbuchtung C sowie eine über die Soll-Form B hinausragende Ausbeulung D auf. Auf dem Stückgut 18 sind auch ein optionaler RFID-Tag 26 und ein optionaler Barcode 27 angeordnet. Im Bereich der Stückgut-Messeinrichtung 19 befinden sich weiterhin mit Motoren M angetriebene Förderbänder 28 des ersten Einlager-Abschnitts 10a. Anstelle von Förderbändern 28 könnten natürlich auch direkt die Förderrollen im Kontakt mit dem Stückgut 18 stehen und dieses antreiben. Insbesondere können mehrere Förderrollen über Riemen miteinander verbunden sein, um diese synchron anzutreiben.

Die Einbuchtung C oder Ausbeulung D kann beispielsweise durch den (maximalen) Normalabstand der Einbuchtung C / Ausbeulung D zur Soll-Form B, durch eine von der Soll-Form B abweichende Fläche, durch ein zwischen Einbuchtung C / Ausbeulung D und Soll-Form B eingeschlossenes Volumen oder durch eine Maßzahl angegeben sein, die von einer der angegebenen Größen oder aus einer Kombination dieser Größen abgeleitet ist. Beispielsweise kann die Maßzahl ein (dimensionsloses) Verhältnis zwischen der oben angegebenen Fläche und der Oberfläche der Soll-Form B oder ein (dimensionsloses) Verhältnis zwischen dem oben angegebenen Volumen und dem Volumen der Soll-Form B sein. Die Abweichung des Stückguts 18 von einer Soll-Form B kann auch die Position der Abweichung am Stückgut 18 beinhalten, zum Beispiel, "oben", "unten", "links", "rechts", "vorne", "hinten".

Neben der Abweichung des Stückguts 18 von einer Soll-Form B können auch andere Stückgut-Eigenschaften a ermittelt und verwertet werden, beispielsweise das Gewicht des Stückguts 18 (die Stückgut-Messeinrichtung 19 würde dann eine Waage umfassen, sofern das Gewicht nicht schon vor der Anlieferung in das Lager- und Kommissioniersystem 1 bekannt ist), Abmessungen (z.B. Länge, Breite, Höhe, Oberfläche oder Volumen) des Stückguts 18 oder eine Oberflächenbeschaffenheit des Stückguts 18. Die Oberflächenbeschaffenheit kann insbesondere ein Reibwert der Oberfläche des Stückguts 18 sein. Die Oberflächenbeschaffenheit kann aber beispielsweise auch ein Feuchtigkeitswert des Stückguts 18 sein, insbesondere wenn dieser an der Oberfläche hygroskopisch ist (und dort zum Beispiel aus Karton oder Holz besteht).

Häufig wird durch die Stückgut-Messeinrichtung 19 oder einer damit verbundenen Bewertungseinheit nach dem Stand der Technik eine Klassifizierung betreffend die Fördereigenschaften vorgenommen, zum Beispiel, "nicht förderbar", "förderbar", "schlecht förderbar", "gut förderbar". Diese Fördereigenschaften können für die Zwecke dieser Offenbarung ebenfalls als Stückgut-Eigenschaften a aufgefasst werden, auch wenn sie streng genommen das Zusammenspiel zwischen einem Stückgut 18 und der Fördertechnik 9 beschreiben. Unter einer solchen Stückgut-Messeinrichtung 19 kann insbesondere eine bereits nach dem Stand der Technik eingesetzte Stückgut-Messeinrichtung 19 verstanden werden, die im Speziellen die Abweichung des Stückguts 18 von einer Soll-Form B ermittelt und daraus eine Fördereigenschaft ableitet.

Fig. 3 zeigt nun ein Blockschaltbild der Steuer- und Rechnerarchitektur des Lager- und Kommissioniersystems 1. Diese umfasst die bereits in den Figuren 1 und 2 grundsätzlich offenbarte Stückgut-Messeinrichtung 19, die hier den Laser-Scanner 25 sowie ein damit verbundenes Mess-Verarbeitungsmodul 29 aufweist, mit dessen Hilfe der Messvorgang gesteuert und die vom Laser-Scanner 25 erhaltenen Daten ausgewertet beziehungsweise bewertet werden können. Die vom Laser-Scanner 25 und dem Mess-Verarbeitungsmodul 29 ermittelten Stückgut-Eigenschaften a werden mit Hilfe der Schreibeinrichtung 30 des Mess-Verarbeitungsmoduls 29 in einen Datenspeicher 31 geschrieben und dort für den späteren Gebrauch gespeichert.

Im Verlauf der Fördertechnik 9 kann sich eine Überwachungs- und Klassifizierungseinheit 32 befinden, welche dazu eingerichtet ist, eine Störung beim Transport des Stückguts 18 festzustellen und dann den Transport des Stückguts 18 als gestört zu klassifizieren, oder den Transport als störungsfrei zu klassifizieren, wenn innerhalb eines vorgebbaren Beobachtungszeitraums keine Störung beim Transport dieses Stückguts 18 durch die Überwachungs- und Klassifizierungseinheit 32 festgestellt wurde. Konkret umfasst die Überwachungs- und Klassifizierungseinheit 32 mehrere Sensoren 33a, 33b und ein mit diesen verbundenes Überwachungs/Klassifizierungs-Verarbeitungsmodul 34. Der Sensor 33a ist in diesem Beispiel konkret als Kamera ausgebildet, beim Sensor 33b kann es sich beispielsweise um eine Stromsensor handeln, der den Motorstrom des Motors M misst. Die Sensoren 33a, 33b erfassen das Stückgut 18' (welches das Stückgut 18 zu einem späteren Zeitpunkt ist) und überwachen gemeinsam mit dem Überwachungs/Klassifizierungs-Verarbeitungsmodul 34 den Transport des Stückguts 18'.

Der Transport als solcher wird durch die Steuerung 35 gesteuert, welche zu diesem Zweck Betriebsparameter b an die Fördertechnik 9 übermittelt. Beispielsweise kann unter einem Betriebsparameter b eine Drehzahl oder ein Drehzahlverlauf eines Motors M verstanden werden.

Die Stückgut-Eigenschaften a aus dem Datenspeicher 31 und eine von der Überwachungs- und Klassifizierungseinheit 32 ermittelte Transport-Klassifizierung c werden in einen lernfähigen Algorithmus 36 eingespeist. Dieser kann aus den Daten, die für eine Vielzahl von Stückgütern 18 erhalten werden, eine Wahrscheinlichkeit für das Auftreten einer Störung beim Transport der Stückgüter 18 (kurz "Störungs-Wahrscheinlichkeit" d) in Abhängigkeit von den Stückgut-Eigenschaften a der Stückgüter 18 berechnen. Diese Störungs-Wahrscheinlichkeit d kann auf einer Ausgabeeinheit 37 angezeigt werden oder als Eingangsparameter für die Steuerung 35 dienen.

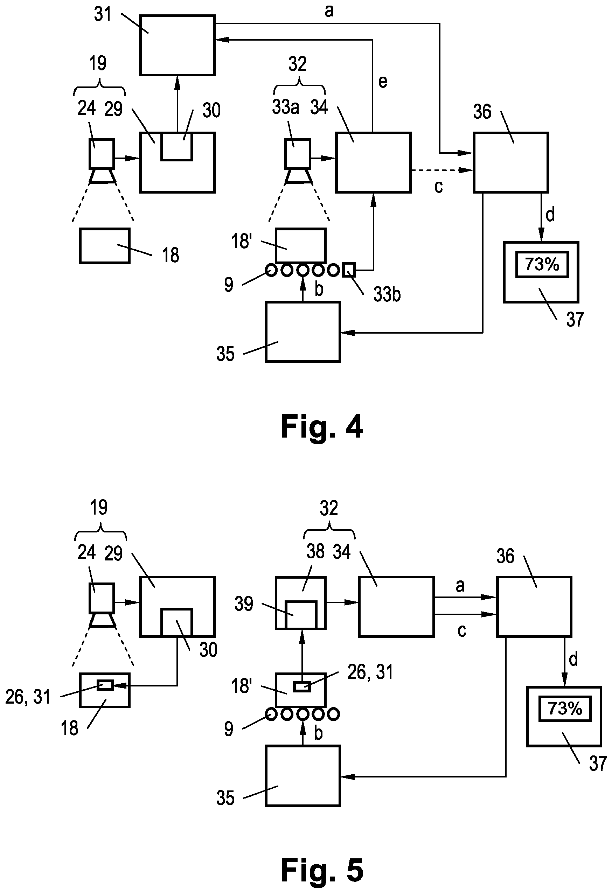

Die Fig. 3 zeigt die Steuer- und Rechnerarchitektur des Lager- und Kommissioniersystems 1 mit besonderem Bezug auf den Lernprozess des lernfähigen Algorithmus 36. In Fig. 4 ist dagegen im Besonderen dargestellt, wie die Ergebnisse des lernfähigen Algorithmus 36 während der Betriebsphase für den Betrieb des Lager- und Kommissioniersystems 1 genutzt werden.

Sobald die Stückgut-Eigenschaften a eines Stückguts 18 erfasst werden, werden diese in den lernfähigen Algorithmus 36 gespeist (also nicht bloß im Datenspeicher 31 gespeichert). Zu diesem Zeitpunkt ist noch nicht bekannt ob (exakt) dieses Stückgut 18 eine Störung beim Transport auf der Fördertechnik 9 verursachen wird, denn dieses mögliche Ereignis liegt ja in der Zukunft. Daher ist der Pfeil von der Überwachungs- und Klassifizierungseinheit 32 zum lernfähigen Algorithmus 36 in der Fig. 4 strichliert gezeichnet. Bekannt ist jedoch aus der Lernphase, ob Stückgüter 18 mit den gleichen oder ähnlichen Eigenschaften häufig oder weniger häufig Störungen verursachen. Demgemäß kann der lernfähige Algorithmus 36 eine Prognose für das Stückgut 18 erstellen. Diese Prognose in Form der Störungs-Wahrscheinlichkeit d kann auf der Ausgabeeinheit 37 angezeigt werden oder sie wird in die Steuerung 35 eingespeist.

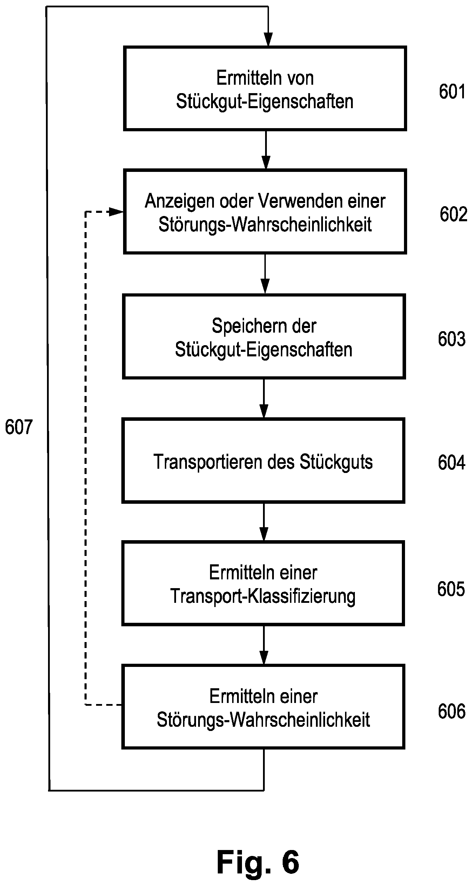

Zusammenfassend ergibt sich also folgender Ablauf, der auch in der Fig. 6 in Form eines Ablaufdiagramms visualisiert ist:
a) Ermitteln von Stückgut-Eigenschaften a eines mit einer Fördertechnik 9 des Lager- und Kommissioniersystems 1 zu transportierenden Stückguts 18 mit einer Stückgut-Messeinrichtung 19 des Lager- und Kommissioniersystems 1 (Schritt 601),
b) Ausgabe einer Störungs-Wahrscheinlichkeit d für das Auftreten einer Störung mit einer Ausgabeeinheit 37 des Lager- und Kommissioniersystems 1 und/oder Einleiten einer Maßnahme, welche die Wahrscheinlichkeit für das Auftreten dieser Störung verringert, mit einer Steuerung 35 des Lager- und Kommissioniersystems 1, wenn das Auftreten einer Störung wahrscheinlich ist, jeweils basierend auf den ermittelten Stückgut-Eigenschaften a (Schritt 602),
c) Speichern der ermittelten Stückgut-Eigenschaften a in einem dem Stückgut 18 zugeordneten Datenspeicher 31 (Schritt 603),
d) Transportieren des Stückguts 18 mit der Fördertechnik 9 des Lager- und Kommissioniersystems 1 (Schritt 604),
e) Überwachen des Transports dieses Stückguts 18 durch eine Überwachungs- und Klassifizierungseinheit 32 des Lager- und Kommissioniersystems 1 und Klassifizieren des Transports als gestört, wenn eine Störung beim Transport dieses Stückguts 18 durch die Überwachungs- und Klassifizierungseinheit 32 festgestellt wird, oder Klassifizieren des Transports durch die Überwachungs- und Klassifizierungseinheit 32 als störungsfrei, wenn innerhalb eines vorgebbaren Beobachtungszeitraums keine Störung beim Transport dieses Stückguts 18 durch die Überwachungs- und Klassifizierungseinheit 32 festgestellt wird (Schritt 605),
f) Einspeisen der gespeicherten Stückgut-Eigenschaften a und der im Schritt e) ermittelten Transport-Klassifizierung c des Transports des Stückguts 18 in einen lernfähigen Algorithmus 36 (Schritt 606),
g) Wiederholen der Schritte a) bis f) für eine Vielzahl von Stückgütern 18 und Berechnen einer Störungs-Wahrscheinlichkeit d für das Auftreten einer Störung beim Transport der verschiedenen Stückgüter 18, für welche die Schritte a) bis f) durchlaufen werden, in Abhängigkeit von deren Stückgut-Eigenschaften a mit Hilfe des lernfähigen Algorithmus 36 (Schleife 607).

Insbesondere ist es dabei möglich den Schritt b) erst nach einer Vielzahl von Durchläufen der Schritte a) und c) bis f) auszuführen. Das heißt, es wird sichergestellt, dass der Betriebsphase eine hinreichend lange Lernphase vorausgeht. Denkbar ist insbesondere, dass in einem Lager- und Kommissioniersystem 1 ein lernfähiger Algorithmus 36 installiert wird, der bereits eine Lernphase durchlaufen hat. Mit anderen Worten können in einem Lager- und Kommissioniersystem 1 Erfahrungen aus anderen Lager- und Kommissioniersystemen 1 genutzt werden. Die Lernphase beginnt daher nicht bei "Null", sondern startet von einem erwarteten Verhalten des Lager- und Kommissioniersystemen 1. Eine Adaptierung an die real im Lager- und Kommissioniersystemen 1 vorliegenden Verhältnisse kann daher dementsprechend schneller erfolgen. Selbstverständlich können Lern- und Betriebsphase auch parallel laufen. Auf ein bestimmtes Stückgut 18 bezogen profitiert man dann aus Erfahrungen, die beim Transport vergangener Stückgüter 18 gewonnen wurden, und schafft gleichzeitig Erfahrungen für zukünftige Stückgüter 18. Dies ist in der Fig. 6 mit dem strichlierten Pfeil angedeutet, welcher die Rückwirkung der Störungs-Wahrscheinlichkeit d symbolisiert.

Angemerkt wird auch, dass die Schritte 602 und 603 auch in anderer Reihenfolge oder gleichzeitig ausgeführt werden können. Ähnliches trifft für die Schritte 604 und 605 zu, die ebenfalls simultan ausgeführt werden.

Fig. 5 zeigt eine weitere Variante der Steuer- und Rechnerarchitektur des Lager- und Kommissioniersystems 1, die ähnlich der in den Fig. 3 und 4 gezeigten Architektur ist, sich jedoch hinsichtlich des Aufbaus der Überwachungs- und Klassifizierungseinheit 32 und der Realisierung des Datenspeichers 31 unterscheidet. Die Überwachungs- und Klassifizierungseinheit 32 umfasst in diesem Fall eine mobile Datenerfassungseinheit 38 mit einer Leseeinrichtung 39, mit welcher ein RFID-Tag 26 und/oder ein Barcode 27 auf einem Stückgut 18 gelesen werden kann. Denkbar ist insbesondere auch, dass die Leseeinrichtung 39 zum Lesen einer Positionsmarke 24 ausgebildet ist, welche auf der Fördertechnik 9 angeordnet oder dieser zumindest zugeordnet ist (siehe Fig. 1). Diese Positionsmarke 24 kann ebenfalls als RFID-Tag oder Barcode ausgebildet sein.

Denkbar ist, dass der Datenspeicher 31 im RFID-Tag 26 enthalten ist. Demgemäß ist auch vorstellbar, dass die mobile Datenerfassungseinheit 38 direkt die Stückgut-Eigenschaften a ermittelt. Dies ist in der Fig. 5 dargestellt, aus der auch ersichtlich ist, dass die Stückgut-Eigenschaften a in diesem Fall von der Überwachungs- und Klassifizierungseinheit 32 an den lernfähigen Algorithmus 36 übermittelt werden. Das heißt, die dem Stückgut 18 zugeordneten Stückgut-Eigenschaften a werden aus dem auf dem Stückgut 18 angeordneten Datenspeicher 31 (dem RFID-Tag 26) ausgelesen, und die Stückgut-Eigenschaften a werden gemeinsam mit der Transport-Klassifizierung c an den lernfähigen Algorithmus 36 übermittelt.

Denkbar ist, aber auch, dass die mobile Datenerfassungseinheit 38 eine Identifikation e des Stückguts 18 ermittelt, etwa durch Lesen des Barcodes 27 oder des RFID-Tags 26, der in dieser Ausführungsform lediglich eine Identifikation e des Stückguts 18, nicht aber dessen Stückgut-Eigenschaften a speichert. In diesem Fall wird also eine auf dem Stückgut 18 angeordnete Identifikation e ermittelt, die der Identifikation e zugeordneten Stückgut-Eigenschaften a werden aus dem Datenspeicher 31 ausgelesen und die Stückgut-Eigenschaften a werden gemeinsam mit der Transport-Klassifizierung c an den lernfähigen Algorithmus 36 übermittelt.

An dieser Stelle wird angemerkt, dass die Identifikation e des Stückguts 18 nicht notgedrungen durch die mobile Datenerfassungseinheit 38 ermittelt werden muss, sondern ein Stückgut 18 auch durch fix installierte Sensoren 33a, 33b der Überwachungs- und Klassifizierungseinheit 32 ermittelt werden kann, insbesondere durch die Kamera 33a. Der Vollständigkeit halber wird auch angemerkt, dass die Überwachungs- und Klassifizierungseinheit 32 sowohl fix installierte Sensoren 33a, 33b als auch die mobile Datenerfassungseinheit 38 umfassen kann.

Für die im Schritt b) eingeleitete Maßnahme zum Abwenden einer Störung stehen nun eine Reihe von Möglichkeiten zur Verfügung, die nachfolgend beispielhaft und nicht abschließend aufgezählt werden:
-) Umladen der in einem Ladehilfsmittel 17a enthaltenen Waren16c in ein anderes Ladehilfsmittel 17b an einer Umladestation 20 oder Einleiten einer solchen Umladung.
-) Berücksichtigung eines Störungs-Orts A, an dem eine Störung auftritt, für die Ermittlung der Störungs-Wahrscheinlichkeit d und insbesondere Umgehung des prognostizierten Störungs-Orts A oder Ändern eines Betriebsparameters b der Fördertechnik 9 am prognostizierten Störungs-Ort A.
-) Berücksichtigung eines Betriebszustands der Fördertechnik 9 am Störungs-Ort A und insbesondere Umgehung des prognostizierten Störungs-Orts A oder Ändern eines Betriebsparameters b der Fördertechnik 9 am prognostizierten Störungs-Ort A wenn der ermittelte Betriebszustand dies indiziert.
-) Berücksichtigung einer Störungs-Zeit, die bis zum Auftreten einer Störung verstrichen ist, und/oder eines Störungs-Wegs, der bis zum Auftreten einer Störung vom Stückgut 18 zurückgelegt wurde. Insbesondere kann eine der oben genannten Maßnahmen nach Ablauf der Störungs-Zeit oder nach Zurücklegen des Störungs-Wegs automatisch ergriffen werden, oder es kann auch eine Neubewertung des Stückguts 18 durch die Stückgut-Messeinrichtung 19 stattfinden.

Die im Schritt b) eingeleitete Maßnahme zum Abwenden einer Störung kann insbesondere dann eingeleitet werden, wenn die Störungs-Wahrscheinlichkeit d über einem vorgebbaren Schwellwert liegt. Auf diese Weise kann gesteuert werden, wie empfindlich das Lager- und Kommissioniersystem 1 auf prognostizierte Störungen reagiert. Beispielsweise kann eine auf der Störungs-Wahrscheinlichkeit d für das Auftreten einer Störung basierende Maßnahme in Schritt b) eingeleitet werden, wenn die besagte Störungs-Wahrscheinlichkeit d über 10% liegt, über 20% oder über einem anderen vorgebbaren Wert.

Im Detail bedeutet dies Folgendes:
Die im Schritt b) eingeleitete Maßnahme kann - wenn das Stückgut 18 ein mit Waren 16c beladenes Ladehilfsmittel 17a ist - darin bestehen, die im (Quell)Ladehilfsmittel 17a enthaltenen Waren 16c an der Umladestation 20 des Lager- und Kommissioniersystems 1 in ein anderes (Ziel)Ladehilfsmittel 17b umzuladen oder eine solche Umladung einzuleiten und in Folge mit dem Schritt a) fortzusetzen oder das andere (Ziel)Ladehilfsmittel 17b ohne Durchlauf der Schritte a) bis g) auf der Fördertechnik 9 des Lager- und Kommissioniersystems 1 zu transportieren.

Das heißt, die im (Quell)Ladehilfsmittel 17a enthaltenen Waren 16c werden in ein (Ziel)Ladehilfsmittel 17b umgeladen, für welches das Auftreten einer Störung weniger wahrscheinlich ist. Kann das (Ziel)Ladehilfsmittel 17b a priori als in Ordnung eingestuft werden, dann kann dieses ohne Durchlauf der Schritte a) bis g) auf der Fördertechnik 9 des Lager- und Kommissioniersystems 1 transportiert werden. Kann vom ordnungsgemäßen Zustand des (Ziel)Ladehilfsmittels 17 nicht a priori ausgegangen werden, dann kann mit dem Schritt a) fortgesetzt werden. Die Umladung der Waren 16c vom (Quell)Ladehilfsmittel 17a auf das (Ziel)Ladehilfsmittel 17b kann manuell oder automatisch (wie hier durch den Umladeroboter 22) oder kombiniert manuell und automatisch erfolgen.

Dieser Vorgang ist in der Fig. 1 gut erkennbar. Beispielsweise kann bei einer Störungs-Wahrscheinlichkeit d über 20% vorgesehen sein, dass das betreffende Stückgut 18 durch die Umlenkvorrichtung 23 zur Umladestation 20 geleitet wird, wo die Waren 16c wie beschrieben umgeladen werden. Liegt die Störungs-Wahrscheinlichkeit d darunter, wird das Stückgut 18 weiter auf dem zweiten Einlager-Abschnitt 10b (dem Loop) weiter transportiert. Die Umlenkvorrichtung 23 ist also dazu eingerichtet, die Stückgüter 18 abhängig von der Störungs-Wahrscheinlichkeit d direkt zum Lagerbereich 8a..8d oder zur Umladestation 20 zu transportieren.

Denkbar ist auch, dass ein Störungs-Ort A, an dem eine Störung auftritt, im Schritt e) von der Überwachungs- und Klassifizierungseinheit 32 erfasst wird, im Schritt f) in den lernfähigen Algorithmus 36 eingespeist wird und in den Schritten b) und g) dahingehend berücksichtigt wird, dass die Störungs-Wahrscheinlichkeit d für das Auftreten einer Störung beim Transport der Stückgüter 18 in Abhängigkeit von den Stückgut-Eigenschaften a eines Stückguts 18 und in Abhängigkeit vom Störungs-Ort A angegeben wird. Dadurch können Orte im Lager- und Kommissioniersystem 1, die für bestimmte Klassen von Stückgut-Eigenschaften a kritisch sind, das heißt an denen beim Transport dieser Stückgüter 18 häufig Störungen auftreten, identifiziert werden.

Die im Schritt b) eingeleitete Maßnahme kann nun insbesondere darin bestehen, das Stückgut 18 unter Umgehung des prognostizierten Störungs-Orts A auf der Fördertechnik 9 des Lager- und Kommissioniersystems 1 zu transportieren, insbesondere dann oder nur dann, wenn eine Störungs-Wahrscheinlichkeit d durch die Umgehung des prognostizierten Störungs-Orts A geringer ausfällt. Diese Möglichkeit eröffnet sich insbesondere dann, wenn für das Stückgut 18 mehrere Transportwege innerhalb des Lager- und Kommissioniersystems 1 wahlfrei zur Verfügung stehen. Beispielsweise kann vorgesehen sein, das Stückgut 18 in jenen Lagerbereich 8a, 8c, 8d, 8e einzulagern, bei dem Störungen während des Einlagervorgangs (und gegebenenfalls auch Auslagervorgangs) weniger oder am wenigsten wahrscheinlich sind. Das heißt, eine Einlagerung in den Lagerbereich 8b wird wegen der prognostizierten Störung vermieden. Es kann auch vorgesehen sein, dass das Stückgut 18 über jene Transportroute zu einem bestimmten Ziel transportiert wird, für die Störungen während des Transports weniger oder am wenigsten wahrscheinlich sind. Beispielsweise kann das betreffende Stückgut 18 mit einem autonomen Flurförderfahrzeug 11a..11c transportiert werden, wenn bei einem Transport auf der ortsfesten Fördertechnik eine Störung droht. Auch ist denkbar, dass ein Kommissioniervorgang im Kommissionierbereich 13, bei dem das Stückgut 18 als Quell-Ladehilfsmittel 17d fungiert, an der manuellen Kommissionierstation 15 erfolgt, wenn für eine alternative automatischen Kommissioniervorgang an der automatischen Kommissionierstation 14 eine Störung wahrscheinlich ist, und umgekehrt.

Die beiden bisher genannten Varianten können auch kombiniert werden. Unter der Voraussetzung, dass das Stückgut 18 ein mit Waren 16c beladenes Ladehilfsmittel 17a ist, kann die im Schritt b) eingeleitete Maßnahme darin bestehen,
i) das Stückgut 18 unter Umgehung des prognostizierten Störungs-Orts A auf der Fördertechnik 9 des Lager- und Kommissioniersystems 1 zu transportieren, wenn dies möglich ist oder
ii) die im Ladehilfsmittel 17a enthaltenen Waren 16c an der Umladestation 20 des Lager- und Kommissioniersystems 1 in ein anderes Ladehilfsmittel 17b umzuladen und in Folge mit dem Schritt a) fortzusetzen oder das andere Ladehilfsmittel 17b ohne Durchlauf der Schritte a) bis g) auf der Fördertechnik 9 des Lager- und Kommissioniersystems 1 zu transportieren, wenn der Schritt i) nicht möglich ist.

Bei dieser Variante wird ein (zeitaufwändiger) Umladevorgang nach Möglichkeit vermieden, nämlich dann, wann eine prognostizierte Störung dadurch abgewendet werden kann, dass das Stückgut 18 unter Umgehung des prognostizierten Störungs-Orts A auf der Fördertechnik 9 des Lager- und Kommissioniersystems 1 transportiert werden kann. Gegebenenfalls kann der Schritt ii) auch dann ausgeführt werden, wenn Schritt i) zwar grundsätzlich möglich wäre, die dadurch erzielbare Reduktion der Störungs-Wahrscheinlichkeit d jedoch gering ausfällt, insbesondere geringer als die durch Schritt ii) erzielbare Reduktion der Störungs-Wahrscheinlichkeit d.

Denkbar wäre auch, dass die im Schritt b) eingeleitete Maßnahme darin besteht, einen Betriebsparameter b der Fördertechnik 9 am prognostizierten Störungs-Ort A zu ändern, insbesondere dann oder nur dann, wenn eine Störungs-Wahrscheinlichkeit d bei Änderung der Betriebsparameter b am prognostizierten Störungs-Orts A geringer ausfällt. Diese Möglichkeit eröffnet sich insbesondere dann, wenn am prognostizierten Störungs-Ort A einstellbare Betriebsparameter b für die Fördertechnik 9 zur Verfügung stehen. Ein Betriebsparameter b ist eine für die Fördertechnik 9 einstellbare Stellgröße zur Beeinflussung des Betriebs der Fördertechnik 9. Unter einem Betriebsparameter b kann beispielsweise eine Förder-Geschwindigkeit auf der Fördertechnik 9 und/oder eine Beschleunigung auf der Fördertechnik 9 verstanden werden. Beispielsweise wäre vorstellbar, eine Förder-Geschwindigkeit und/oder eine Beschleunigung beim Fördern des Stückguts 18 am prognostizierten Störungs-Ort A zu verringern.

Denkbar wäre wiederum, ein Umladen von Waren16c nur bedingt auszuführen. Beispielsweise kann - wenn das Stückgut 18 ein mit Waren 16c beladenes Ladehilfsmittel 17a ist - die im Schritt b) eingeleitete Maßnahme darin bestehen,
i) einen Betriebsparameter b der Fördertechnik 9 am prognostizierten Störungs-Ort A zu ändern, wenn dies möglich ist oder
ii) die im Ladehilfsmittel 17a enthaltenen Waren 16c an der Umladestation 20 des Lager- und Kommissioniersystems 1 in ein anderes Ladehilfsmittel 17b umzuladen und in Folge mit dem Schritt a) fortzusetzen oder das andere Ladehilfsmittel 17b ohne Durchlauf der Schritte a) bis g) auf der Fördertechnik 9 des Lager- und Kommissioniersystems 1 zu transportieren, wenn der Schritt i) nicht möglich ist.

Bei dieser Variante wird ein (zeitaufwändiger) Umladevorgang nach Möglichkeit ebenfalls vermieden, nämlich dann, wann eine prognostizierte Störung durch Änderung eines Betriebsparameters b der Fördertechnik 9 am prognostizierten Störungs-Ort A abgewendet werden kann. Gegebenenfalls kann der Schritt ii) auch dann ausgeführt werden, wenn Schritt i) zwar grundsätzlich möglich wäre, die dadurch erzielbare Reduktion der Störungs-Wahrscheinlichkeit d jedoch gering ausfällt, insbesondere geringer als die durch Schritt ii) erzielbare Reduktion der Störungs-Wahrscheinlichkeit d.

Denkbar wäre weiterhin eine Kombination der bisher vorgestellten Varianten zum Abwenden einer Störung. Unter der Voraussetzung, dass das Stückgut 18 ein mit Waren 16c beladenes Ladehilfsmittel 17a ist kann die im Schritt b) eingeleitete Maßnahme darin bestehen,
i) das Stückgut 18 unter Umgehung des prognostizierten Störungs-Orts A auf der Fördertechnik 9 des Lager- und Kommissioniersystems 1 zu transportieren, wenn dies möglich ist oder
ii) einen Betriebsparameter b der Fördertechnik 9 am prognostizierten Störungs-Ort A zu ändern, wenn dies möglich ist oder
iii) die im Ladehilfsmittel 17a enthaltenen Waren 16c an der Umladestation 20 des Lager- und Kommissioniersystems 1 in ein anderes Ladehilfsmittel 17b umzuladen und in Folge mit dem Schritt a) fortzusetzen oder das andere Ladehilfsmittel 17b ohne Durchlauf der Schritte a) bis g) auf der Fördertechnik 9 des Lager- und Kommissioniersystems 1 zu transportieren, wenn der Schritt i) und/oder der Schritt ii) nicht möglich ist.

Bei dieser Variante wird ein (zeitaufwändiger) Umladevorgang nach Möglichkeit wiederum vermieden, nämlich dann, wann eine prognostizierte Störung dadurch abgewendet werden kann, dass das Stückgut 18 unter Umgehung des prognostizierten Störungs-Orts A auf der Fördertechnik 9 des Lager- und Kommissioniersystems 1 transportiert werden kann oder durch Änderung eines Betriebsparameters b der Fördertechnik 9 am prognostizierten Störungs-Ort A. Gegebenenfalls kann der Schritt iii) auch dann ausgeführt werden, wenn Schritt i) oder Schritt ii) zwar grundsätzlich möglich wäre, die dadurch erzielbare Reduktion der Störungs-Wahrscheinlichkeit d jedoch gering ausfällt, insbesondere geringer als die durch Schritt iii) erzielbare Reduktion der Störungs-Wahrscheinlichkeit d. Für die Schritte i) und ii) kann eine fixe Priorisierung vorgenommen werden (also Schritt ii) nur dann ausführen, wenn Schritt i) nicht möglich ist oder umgekehrt) oder ein Priorisierung nach der erzielbaren Reduktion der Störungs-Wahrscheinlichkeit d (also jenen der Schritte i) oder ii) ausführen, für den die höchste Reduktion der Störungs-Wahrscheinlichkeit d erzielbar ist).

Vorteilhaft ist es, wenn der Schritt f) für jene Stückgüter 18 übersprungen wird, für welche die im Schritt b) eingeleitete Maßnahme darin besteht, das Stückgut 18 unter Umgehung des prognostizierten Störungs-Orts A auf der Fördertechnik 9 des Lager- und Kommissioniersystems 1 zu transportieren oder für welche die im Schritt b) eingeleitete Maßnahme darin besteht, einen Betriebsparameter b der Fördertechnik 9 am prognostizierten Störungs-Ort A zu ändern. Dadurch wird vermieden, dass der selbstlernende Algorithmus 36 irrtümlicherweise davon ausgeht, dass das ein kritisches Stückgut 18, das einen aktiven Eingriff zur Störungsvermeidung verursacht hat, grundsätzlich unkritisch ist weil es ja keine tatsächlichen Störung verursacht (was aber im aktiven Eingriff zur Störungsvermeidung begründet ist). Beispielsweise können die betreffenden Stückgüter 18 mit einem "Flag" markiert und vom Lernprozess ausgeschlossen werden. Für den selbstlernenden Algorithmus 36 sind sie dann praktisch inexistent, so wie das auch beim Umladen der Waren 16c von einem Ladehilfsmittel 17a in ein anderes Ladehilfsmittel 17b der Fall ist. Hier wird das die Störung (voraussichtlich) verursachende Stückgut 18 (auch physisch) verworfen und taucht im weiteren Ablauf daher nicht mehr auf. Zusätzlich zu Schritt f) kann auch der Schritt e) übersprungen werden.

Weiterhin ist vorstellbar, dass ein Betriebszustand der Fördertechnik 9 am Störungs-Ort A im Schritt e) erfasst wird, im Schritt f) in den lernfähigen Algorithmus 36 eingespeist wird und in den Schritten b) und g) dahingehend berücksichtigt wird, dass die Störungs-Wahrscheinlichkeit d für das Auftreten einer Störung beim Transport der Stückgüter 18 in Abhängigkeit von den Stückgut-Eigenschaften a eines Stückguts 18, in Abhängigkeit vom Störungs-Ort A und in Abhängigkeit vom Betriebszustand am Störungs-Ort A angegeben wird. Dadurch kann ein Betriebszustand an einem Störungs-Ort A, die für bestimmte Klassen von Stückgut-Eigenschaften a kritisch sind, das heißt bei denen beim Transport dieser Stückgüter 18 häufig Störungen auftreten identifiziert werden. Ein "Betriebszustand" der Fördertechnik 9 ist insbesondere auch das Ergebnis vorgegebener Betriebsparameter b. Zum Beispiel können auf die Belastung der Fördertechnik 9 bezogene Werte vorgesehen sein, wie etwa "Leerlauf", "Teillastbetrieb" oder "Volllastbetrieb", oder auf eine Störung bezogene Werte, wie etwa "Normalbetrieb" oder "Störbetrieb". Selbstverständlich kann der Betriebszustand auch näher charakterisierende Werte annehmen und insbesondere eine Störung näher beschreiben. Beispielsweise kann der genannte "Betriebszustand" durch Vibrationen eines Fördermittels charakterisiert sein oder diese beschreiben, etwa wenn bei einem rotierenden Teil des Fördermittels ein Lagerschaden aufgetreten ist. Zum Beispiel wäre vorstellbar, dass leichte Stückgüter 18 statistisch gesehen häufig von einem Vertikalheber fallen, dessen Führungssystem nicht mehr einwandfrei funktioniert und an dem daher verstärkte Vibrationen auftreten.

Insbesondere kann vorgesehen sein, dass eine Umgehung des prognostizierten Störungs-Orts A auf der Fördertechnik 9 des Lager- und Kommissioniersystems 1 beim Transport des Stückguts 18 oder eine Änderung eines Betriebsparameters b der Fördertechnik 9 am prognostizierten Störungs-Ort A nur dann eingeleitet wird, wenn für den am prognostizierten Störungs-Ort A vorliegenden Betriebszustand eine Störung wahrscheinlich ist. Diese Variante berücksichtigt, dass sich Betriebszustände der Fördertechnik 9 im Laufe der Zeit ändern können. Insbesondere betrifft dieser Fall Reparaturen an der Fördertechnik 9, nach welchen sich der Betriebszustand schlagartig zum Positiven verändern kann. Beispielsweise kann ein Störungs-Ort A für bestimmte Klassen von Stückgut-Eigenschaften a nach einer Reparatur plötzlich unkritisch sein, wodurch eine unnötige Umleitung von Stückgütern 18 oder ein unnötiges Eingreifen in die Betriebsparameter b vermieden werden können. Insbesondere ist diese Variante auch auf die Schritte i), ii) und iii) der weiter oben genannten Ausführungsformen anwendbar, wobei dabei der Betriebszustand am Störungs-Ort A berücksichtigt wird. Ein Beispiel wäre die Reparatur des defekten Führungssystems des oben angesprochenen Vertikalhebers, wodurch zukünftig übermäßige Vibrationen vermieden werden können. Auch leichte Stückgüter 18 würden dann statistisch gesehen nicht mehr häufig (oder gar nicht mehr) unbeabsichtigt vom Vertikalheber fallen.

In einer weiteren Ausführungsvariante wird eine ab dem Zeitpunkt der Übergabe des Stückguts 18 auf die Fördertechnik 9 (am Wareneingang 3) bis zum Auftreten einer Störung am Störungs-Ort A verstrichene Störungs-Zeit und/oder ein vom Stückgut 18 auf der Fördertechnik 9 bis zum Auftreten einer Störung zurückgelegter Störungs-Weg im Schritt e) von der Überwachungs- und Klassifizierungseinheit 32 erfasst, im Schritt f) in den lernfähigen Algorithmus 36 eingespeist und in den Schritten b) und g) dahingehend berücksichtigt, dass die Störungs-Wahrscheinlichkeit d für das Auftreten einer Störung beim Transport der Stückgüter 18 in Abhängigkeit von den Stückgut-Eigenschaften a eines Stückguts 18 und in Abhängigkeit von der Störungs-Zeit und/oder dem Störungs-Weg angegeben wird. Dadurch kann festgestellt werden, ob das Auftreten von Störungen nach einer bestimmten Verweilzeit der Stückgüter 18 auf der Fördertechnik 9 oder nach Zurücklegen eines bestimmten Wegs auf der Fördertechnik 9 wahrscheinlicher wird und daher vorteilhaft Schritt b) ausgeführt werden sollte. Der angesprochene Weg kann insbesondere (nur) die zurückgelegte Wegstrecke betreffen oder auch Routeninformationen beinhalten. Beispielsweise sind Störungen eher zu erwarten, wenn das Stückgut 18 häufig Orte passiert hat, an denen Änderungen der Stückgut-Eigenschaften a zu befürchten sind. Beispielweise könnte das Passieren von Ein- und Ausschleusern zu einer nachteiligen Deformierung des Stückguts 18 führen. Eine Zeitspanne, in der das Stückgut 18 im Lager 5 eingelagert war, kann in den obigen Betrachtungen berücksichtigt (d.h. im einfachsten Fall von der zwischen der Übergabe des Stückguts 18 auf die Fördertechnik 9 bis zum Auftreten einer Störung verstrichene Zeit abgezogen werden), da eine wesentliche Änderung der Stückgut-Eigenschaften a bei der bloßen Lagerung nicht zu erwarten ist. Insbesondere betrifft dies eine Deformation eines Stückguts 18.

Generell können die Schritte a) bis g) für ein und dasselbe Stückgut 18 mehrmals durchlaufen werden. Dadurch können Änderungen der Stückgut-Eigenschaften a, die im Laufe der Zeit auftreten, berücksichtigt werden. Insbesondere trifft dies im obigen Zusammenhang mit der Störungs-Zeit und dem Störungs-Weg zu. Dort kann vorgesehen sein, alternativ zur Ausführung des Schritts b) Schritt a) nochmals zu durchlaufen, das heißt nochmals die Stückgut-Eigenschaften a des Stückguts 18 zu ermitteln.

An dieser Stelle wird angemerkt, dass eine mehrmalige Ermittlung der Stückgut-Eigenschaften a des Stückguts 18 bei der in Fig. 1 dargestellten Struktur im Grunde nur unter Zuhilfenahme der autonomen Flurförderfahrzeuge 11a..11c oder durch Reversieren des ersten Einlager-Abschnitts 10a möglich ist. Die Anordnung der Stückgut-Messeinrichtung 19 an der in der Fig. 1 dargestellten Stelle ist aber nicht zwingend, sondern diese kann auch an anderer Stelle angeordnet werden, beispielsweise im zweiten Einlager-Abschnitt 10b. Denkbar ist auch, dass mehrere Stückgut-Messeinrichtungen 19 im Verlauf der Fördertechnik 9 vorgesehen sind insbesondere im Bereich der Auslagerfördertechnik 9c.

Weiterhin wird an dieser Stelle auch darauf hingewiesen, dass im Lager- und Kommissioniersystem 1 (in der Fig.1 nicht dargestellte) Förderbahnen von der Auslagerseite zur Einlagerseite vorhanden sein können, auf denen beispielsweise nach dem Kommissioniervorgang nicht mehr benötigte Ladehilfsmittel 17a..17g zur Einlagerseite transportiert werden können. Zu diesem Zweck können natürlich auch die autonomen Flurförderfahrzeuge 11a..11c eingesetzt werden. Demzufolge kann ein und dasselbe Ladehilfsmittel 17a.. 17g vergleichsweise lange im Lager- und Kommissioniersystem 1 zirkulieren.

Schließlich ist auch vorstellbar, dass die Schritte b), e), f) und g) unabhängig von einer ab dem Zeitpunkt der Übergabe des Stückguts 18 auf die Fördertechnik 9 bis zum Auftreten einer Störung verstrichenen Störungs-Zeit und/oder unabhängig von einem vom Stückgut 18 auf der Fördertechnik 9 bis zum Auftreten einer Störung zurückgelegten Störungs-Weg ausgeführt werden. Untersuchungen haben gezeigt, dass Störungen häufig zeitnah nach der Übergabe eines Stückguts 18 auf die Fördertechnik 9 (hier am Wareneingang 3) auftreten und danach weniger wahrscheinlich auftreten. Bei dieser Variante wird auf die Berücksichtigung der Störungs-Zeit und/oder des Störungs-Wegs zugunsten eines vereinfachten Aufbaus des lernfähigen Algorithmus 36 verzichtet.

Zusammenfassend werden durch die vorgeschlagenen Maßnahmen Störungen, die ein Stückgut 18 auf der Fördertechnik 9 des Lager- und Kommissioniersystems 1 verursacht, auf dessen Stückgut-Eigenschaften a zurückgeführt beziehungsweise diesen zugeordnet. Durch Sammeln der betreffenden Informationen für eine Vielzahl an Stückgütern 18 kann ein "Muster" für das Auftreten von Störungen erkannt werden (sofern ein solches vorliegt). Sobald dieses Wissen aus Erfahrung vorliegt, können Störungen prognostiziert werden, und es kann eine Wahrscheinlichkeit d dafür ermittelt und angezeigt werden. Weiterhin können Gegenmaßnahmen eingeleitet werden, um das tatsächliche Auftreten der prognostizierten Störung zu vermeiden. Auf diese Weise können insbesondere negative Einflüsse auf das Lager- und Kommissioniersystem 1 durch bestimmte Stückgüter 18, die im Planungsstadium des Lager- und Kommissioniersystems 1 nicht berücksichtigt worden sind oder nicht berücksichtigt werden konnten, nachträglich erkannt werden.

Abschließend wird festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

| | | | |
|---|---|---|---|
| 1 | Lager- und Kommissioniersystem | 32 | Überwachungs- und Klassifizierungseinheit |
| 2 | Gebäude | 33a, 33b | Sensor |
| 3 | Wareneingang | 34 | Überwachungs/Klassifizierungs-Verarbeitungsmodul |
| 4 | Warenausgang | | |
| 5 | Warenlager | 35 | Steuerung |
| 6 | Lagerregal | 36 | lernfähiger Algorithmus |
| 7 | Regalbediengerät | 37 | Ausgabeeinheit |
| 8a..8e | Lagerbereich | 38 | mobile Datenerfassungseinheit |
| 9 | Fördertechnik | | |
| 9a | Einlagerfördertechnik | 39 | Leseeinrichtung |
| 9b | Lagerfördertechnik | | |
| 9c | Auslagerfördertechnik | a | Stückgut-Eigenschaft |
| 10a..10e | Einlager-Abschnitt | b | Betriebsparameter |
| | | c | Transport-Klas sifizierung |
| 11a..11c | autonomes Flurförderfahrzeug | d | Störungs-Wahrscheinlichkeit |
| | | e | Identifikation |
| 12a..12c | Auslager-Abschnitt | | |
| 13 | Kommissionierbereich | A | Störungs-Ort |
| 14 | automatische Kommissionierstationen | B | Soll-Form |
| | | C | Einbuchtung |
| 15 | manuelle Kommissionierstationen | D | Ausbeulung |
| | | M | Motor |
| 16a..16h | Ware | | |
| 17a..17g | Ladehilfsmittel | | |
| 18 | Stückgut | | |
| 19 | Stückgut-Messeinrichtung | | |
| 20 | Umladestation | | |
| 21a | Zuförder-Abschnitt | | |
| 21b | Abförder-Abschnitt | | |
| 22 | Umladeroboter | | |
| 23 | Umlenkvorrichtung | | |
| 24 | Positionsmarke | | |
| 25 | Laser-Scanner | | |
| 26 | RFID-Tag | | |
| 27 | Barcode | | |
| 28 | Förderband | | |
| 29 | Mess-Verarbeitungsmodul | | |
| 30 | Schreibeinrichtung | | |
| 31 | Datenspeicher | | |

## Patentansprüche

1. Verfahren zum Prognostizieren und/oder Abwenden einer zukünftigen Störung in einem Lager- und Kommissioniersystem (1), umfassend die Schritte:
a) Ermitteln von Stückgut-Eigenschaften (a) eines mit einer Fördertechnik (9) des Lager- und Kommissioniersystems (1) zu transportierenden Stückguts (18) mit einer Stückgut-Messeinrichtung (19) des Lager- und Kommissioniersystems (1),
b) Ausgabe einer Wahrscheinlichkeit für das Auftreten einer Störung basierend auf den ermittelten Stückgut-Eigenschaften (a) mit einer Ausgabeeinheit (37) des Lager- und Kommissioniersystems (1) und/oder Einleiten einer Maßnahme, welche die Wahrscheinlichkeit für das Auftreten dieser Störung verringert, mit einer Steuerung (35) des Lager- und Kommissioniersystems (1), wenn das Auftreten einer Störung wahrscheinlich ist, basierend auf den ermittelten Stückgut-Eigenschaften (a),
c) Speichern der ermittelten Stückgut-Eigenschaften (a) in einem dem Stückgut (18) zugeordneten Datenspeicher (31),
d) Transportieren des Stückguts (18) mit der Fördertechnik (9) des Lager- und Kommissioniersystems (1),
e) Überwachen des Transports dieses Stückguts (18) durch eine Überwachungs- und Klassifizierungseinheit (32) des Lager- und Kommissioniersystems (1) und Klassifizieren des Transports als gestört, wenn eine Störung beim Transport dieses Stückguts (18) durch die Überwachungs- und Klassifizierungseinheit (32) festgestellt wird, oder Klassifizieren des Transports durch die Überwachungs- und Klassifizierungseinheit (32) als störungsfrei, wenn innerhalb eines vorgebbaren Beobachtungszeitraums keine Störung beim Transport dieses Stückguts (18) durch die Überwachungs- und Klassifizierungseinheit (32) festgestellt wird,
f) Einspeisen der gespeicherten Stückgut-Eigenschaften (a) und der im Schritt e) ermittelten Transport-Klassifizierung (c) des Transports des Stückguts (18) in einen lernfähigen Algorithmus (36), und
g) Wiederholen der Schritte a) bis f) für eine Vielzahl von Stückgütern (18) und Berechnen einer Wahrscheinlichkeit für das Auftreten einer Störung beim Transport der verschiedenen Stückgüter (18), für welche die Schritte a) bis f) durchlaufen werden, in Abhängigkeit von deren Stückgut-Eigenschaften (a) mit Hilfe des lernfähigen Algorithmus (36).

2. Verfahren nach Anspruch 1, **dadurch gekennzeichnet, dass** der Schritt b) erst nach einer Vielzahl von Durchläufen der Schritte a) und c) bis f) ausgeführt wird.

3. Verfahren nach Anspruch 1 oder 2, **dadurch gekennzeichnet, dass** das Stückgut (18) ein mit Waren (16c) beladenes Ladehilfsmittel (17a..17g) ist und die im Schritt b) eingeleitete Maßnahme darin besteht, die im Ladehilfsmittel (17a) enthaltenen Waren (16c) in ein anderes Ladehilfsmittel (17b) umzuladen oder eine solche Umladung einzuleiten und in Folge mit dem Schritt a) fortzusetzen oder das andere Ladehilfsmittel (17b) ohne Durchlauf der Schritte a) bis g) auf der Fördertechnik (9) des Lager- und Kommissioniersystems (1) zu transportieren.

4. Verfahren nach einem der Ansprüche 1 bis 3, **dadurch gekennzeichnet, dass** ein Störungs-Ort (A), an dem eine Störung auftritt, im Schritt e) erfasst wird, im Schritt f) in den lernfähigen Algorithmus (36) eingespeist wird und in den Schritten b) und g) dahingehend berücksichtigt wird, dass die Störungs-Wahrscheinlichkeit (d) für das Auftreten einer Störung beim Transport der Stückgüter (18) in Abhängigkeit von den Stückgut-Eigenschaften (a) eines Stückguts (18) und in Abhängigkeit vom Störungs-Ort (A) angegeben wird.

5. Verfahren nach Anspruch 4, **dadurch gekennzeichnet, dass** die im Schritt b) eingeleitete Maßnahme darin besteht, das Stückgut (18) unter Umgehung des prognostizierten Störungs-Orts (A) auf der Fördertechnik (9) des Lager- und Kommissioniersystems (1) zu transportieren.

6. Verfahren nach Anspruch 5, **dadurch gekennzeichnet, dass** das Stückgut (18) ein mit Waren (16c) beladenes Ladehilfsmittel (17a..17g) ist und die im Schritt b) eingeleitete Maßnahme darin besteht,
i) das Stückgut (18) unter Umgehung des prognostizierten Störungs-Orts (A) auf der Fördertechnik (9) des Lager- und Kommissioniersystems (1) zu transportieren, wenn dies möglich ist, oder
ii) die im Ladehilfsmittel (17a) enthaltenen Waren (16c) in ein anderes Ladehilfsmittel (17b) umzuladen und in Folge mit dem Schritt a) fortzusetzen oder das andere Ladehilfsmittel (17b) ohne Durchlauf der Schritte a) bis g) auf der Fördertechnik (9) des Lager- und Kommissioniersystems (1) zu transportieren, wenn der Schritt i) nicht möglich ist.

7. Verfahren nach Anspruch 4, **dadurch gekennzeichnet, dass** die im Schritt b) eingeleitete Maßnahme darin besteht, einen Betriebsparameter (b) der Fördertechnik (9) am prognostizierten Störungs-Orts (A) zu ändern.

8. Verfahren nach Anspruch 7, **dadurch gekennzeichnet, dass** das Stückgut (18) ein mit Waren (16c) beladenes Ladehilfsmittel (17a..17g) ist und die im Schritt b) eingeleitete Maßnahme darin besteht,
i) einen Betriebsparameter (b) der Fördertechnik (9) am prognostizierten Störungs-Ort (A) zu ändern, wenn dies möglich ist, oder
ii) die im Ladehilfsmittel (17a) enthaltenen Waren (16c) in ein anderes Ladehilfsmittel (17b) umzuladen und in Folge mit dem Schritt a) fortzusetzen oder das andere Ladehilfsmittel (17b) ohne Durchlauf der Schritte a) bis g) auf der Fördertechnik (9) des Lager- und Kommissioniersystems (1) zu transportieren, wenn der Schritt i) nicht möglich ist.

9. Verfahren nach Anspruch 6 und 8, **dadurch gekennzeichnet, dass** das Stückgut (18) ein mit Waren (16c) beladenes Ladehilfsmittel (17a..17g) ist und die im Schritt b) eingeleitete Maßnahme darin besteht,
i) das Stückgut (18) unter Umgehung des prognostizierten Störungs-Orts (A) auf der Fördertechnik (9) des Lager- und Kommissioniersystems (1) zu transportieren, wenn dies möglich ist, oder
ii) einen Betriebsparameter (b) der Fördertechnik (9) am prognostizierten Störungs-Ort (A) zu ändern, wenn dies möglich ist, oder
iii) die im Ladehilfsmittel (17a) enthaltenen Waren (16c) in ein anderes Ladehilfsmittel (17b) umzuladen und in Folge mit dem Schritt a) fortzusetzen oder das andere Ladehilfsmittel (17b) ohne Durchlauf der Schritte a) bis g) auf der Fördertechnik (9) des Lager- und Kommissioniersystems (1) zu transportieren, wenn der Schritt i) nicht möglich ist.

10. Verfahren nach einem der Ansprüche 5 bis 9, **dadurch gekennzeichnet, dass** der Schritt f) für jene Stückgüter (18) übersprungen wird, für welche die im Schritt b) eingeleitete Maßnahme in den Ansprüchen 5, 6 oder 9 darin besteht, das Stückgut (18) unter Umgehung des prognostizierten Störungs-Orts (A) auf der Fördertechnik (9) des Lager- und Kommissioniersystems (1) zu transportieren, oder für welche die im Schritt b) eingeleitete Maßnahme in den Ansprüchen 7 bis 9 darin besteht, einen Betriebsparameter (b) der Fördertechnik (9) am prognostizierten Störungs-Orts (A) zu ändern.

11. Verfahren nach einem der Ansprüche 1 bis 10, **dadurch gekennzeichnet, dass** ein Betriebszustand der Fördertechnik (9) an einem Störungs-Ort (A), an dem eine Störung auf tritt, im Schritt e) erfasst wird, im Schritt f) in den lernfähigen Algorithmus (36) eingespeist wird und in den Schritten b) und g) dahingehend berücksichtigt wird, dass die Störungs-Wahrscheinlichkeit (d) für das Auftreten einer Störung beim Transport der Stückgüter (18) in Abhängigkeit von den Stückgut-Eigenschaften (a) eines Stückguts (18), in Abhängigkeit vom Störungs-Ort (A) und in Abhängigkeit vom Betriebszustand am Störungs-Ort (A) angegeben wird.

12. Verfahren nach Anspruch 11, **dadurch gekennzeichnet, dass** eine Umgehung des prognostizierten Störungs-Orts (A) auf der Fördertechnik (9) des Lager- und Kommissioniersystems (1) beim Transport des Stückguts (18) oder eine Änderung eines Betriebsparameters (b) der Fördertechnik (9) am prognostizierten Störungs-Orts (A) nur dann eingeleitet wird, wenn für den am prognostizierten Störungs-Ort (A) vorliegenden Betriebszustand eine Störung wahrscheinlich ist.

13. Verfahren nach einem der Ansprüche 1 bis 12, **dadurch gekennzeichnet, dass** eine ab dem Zeitpunkt der Übergabe des Stückguts (18) auf die Fördertechnik (9) bis zum Auftreten einer Störung verstrichene Störungs-Zeit und/oder ein vom Stückgut (18) auf der Fördertechnik (9) bis zum Auftreten einer Störung zurückgelegter Störungs-Weg im Schritt e) erfasst wird, im Schritt f) in den lernfähigen Algorithmus (36) eingespeist wird und in den Schritten b) und g) dahingehend berücksichtigt wird, dass die Störungs-Wahrscheinlichkeit (d) für das Auftreten einer Störung beim Transport der Stückgüter (18) in Abhängigkeit von den Stückgut-Eigenschaften (a) eines Stückguts (18) und in Abhängigkeit von der Störungs-Zeit und/oder dem Störungs-Weg angegeben wird.

14. Verfahren nach einem der Ansprüche 1 bis 12, **dadurch gekennzeichnet, dass** die Schritte b), e), f) und g) unabhängig von einer ab dem Zeitpunkt der Übergabe des Stückguts (18) auf die Fördertechnik (9) bis zum Auftreten einer Störung verstrichenen Störungs-Zeit und/oder unabhängig von einem vom Stückgut (18) auf der Fördertechnik (9) bis zum Auftreten einer Störung zurückgelegten Störungs-Weg ausgeführt werden.

15. Verfahren nach einem der Ansprüche 1 bis 14, **dadurch gekennzeichnet, dass** die Stückgut-Eigenschaften (a) eine oder mehrere Eigenschaften aus der Gruppe: Gewicht des Stückguts (18), Abmessungen des Stückguts (18), Abweichung des Stückguts (18) von einer Soll-Form (B), Oberflächenbeschaffenheit des Stückguts (18) sind.

16. Verfahren nach einem der Ansprüche 1 bis 15, **dadurch gekennzeichnet, dass** die Schritte a) bis g) für ein und dasselbe Stückgut (18) mehrmals durchlaufen werden.

17. Verfahren nach einem der Ansprüche 1 bis 16, **dadurch gekennzeichnet, dass** eine auf der Wahrscheinlichkeit für das Auftreten einer Störung basierende Maßnahme in Schritt b) eingeleitet wird, wenn die besagte Störungs-Wahrscheinlichkeit (d) über einem vorgebbaren Schwellwert liegt.

18. Verfahren nach einem der Ansprüche 1 bis 17, **dadurch gekennzeichnet, dass** die Überwachungs- und Klassifizierungseinheit (32)
- die dem Stückgut (18) zugeordneten Stückgut-Eigenschaften (a) aus dem auf dem Stückgut (18) angeordneten Datenspeicher (31) ausliest und die Stückgut-Eigenschaften (a) gemeinsam mit der im Schritt e) ermittelten Transport-Klassifizierung (c) an den lernfähigen Algorithmus (36) übermittelt, oder
- eine auf dem Stückgut (18) angeordnete Identifikation (e) ermittelt, die der Identifikation (e) zugeordneten Stückgut-Eigenschaften (a) aus dem Datenspeicher (31) ausliest und die Stückgut-Eigenschaften (a) gemeinsam mit der im Schritt e) ermittelten Transport-Klassifizierung (c) an den lernfähigen Algorithmus (36) übermittelt.

19. Verfahren nach Anspruch 18, **dadurch gekennzeichnet, dass** die dem Stückgut (18) zugeordneten Stückgut-Eigenschaften (a) aus dem auf dem Stückgut (18) angeordneten Datenspeicher (31) durch eine mobile Datenerfassungseinheit (38) der Überwachungs- und Klassifizierungseinheit (32) ausgelesen oder die auf dem Stückgut (18) angeordnete Identifikation (e) durch eine mobile Datenerfassungseinheit (38) der Überwachungs- und Klassifizierungseinheit (32) ermittelt wird.

20. Lager- und Kommissioniersystem (1), umfassend
- eine Fördertechnik (9) zum Transport eines Stückguts (18),
- eine Stückgut-Messeinrichtung (19) zum Ermitteln von Stückgut-Eigenschaften (a) des Stückguts (18),
- eine Schreibeinrichtung (30) zum Speichern der Stückgut-Eigenschaften (a) in einem dem Stückgut (18) zugeordneten Datenspeicher (31) und eine Leseeinrichtung (39) zum Auslesen der Stückgut-Eigenschaften (a) aus dem Datenspeicher (31) oder eine kombinierte Schreib- und Leseeinrichtung (30, 39) zum Speichern der Stückgut-Eigenschaften (a) in einem dem Stückgut (18) zugeordneten Datenspeicher (31) und zum Auslesen der Stückgut-Eigenschaften (a) aus dem Datenspeicher (31),
- eine Ausgabeeinheit (37) zum Ausgeben einer Wahrscheinlichkeit für das Auftreten einer Störung und/oder eine Steuerung (35) zum Einleiten einer Maßnahme, welche die Wahrscheinlichkeit für das Auftreten dieser Störung verringert, wenn das Auftreten einer Störung wahrscheinlich ist, jeweils basierend auf den ermittelten Stückgut-Eigenschaften (a),
- eine Überwachungs- und Klassifizierungseinheit (32), welche dazu eingerichtet ist, eine Störung beim Transport des Stückguts (18) festzustellen und dann den Transport des Stückguts (18) als gestört zu klassifizieren, oder den Transport als störungsfrei zu klassifizieren, wenn innerhalb eines vorgebbaren Beobachtungszeitraums keine Störung beim Transport dieses Stückguts (18) durch die Überwachungs- und Klassifizierungseinheit (32) festgestellt wurde, und
- einen lernfähigen Algorithmus (36), in welchen gespeicherte Stückgut-Eigenschaften (a) und eine Transport-Klassifizierung (c) des Transports des Stückguts (18) einspeisbar sind, und welcher zum Berechnen einer Wahrscheinlichkeit für das Auftreten einer Störung beim Transport verschiedener Stückgüter (18) in Abhängigkeit von deren Stückgut-Eigenschaften (a) ausgebildet ist.

21. Lager- und Kommissioniersystem (1) nach Anspruch 20, **gekennzeichnet durch** einen dem Stückgut (18) zugeordneten Datenspeicher (31) zum Speichern der ermittelten Stückgut-Eigenschaften (a).

22. Lager- und Kommissioniersystem (1) nach Anspruch 20 oder 21, **dadurch gekennzeichnet, dass** die Überwachungs- und Klassifizierungseinheit (32) dazu eingerichtet ist,
- die dem Stückgut (18) zugeordneten Stückgut-Eigenschaften (a) aus dem auf dem Stückgut (18) angeordneten Datenspeicher (31) auszulesen und die Stückgut-Eigenschaften (a) gemeinsam mit der Transport-Klassifizierung (c) an den lernfähigen Algorithmus (36) zu übermitteln, oder
- eine auf dem Stückgut (18) angeordnete Identifikation (e) zu ermitteln, die der Identifikation (e) zugeordneten Stückgut-Eigenschaften (a) aus dem Datenspeicher (31) auszulesen und die Stückgut-Eigenschaften (a) gemeinsam mit der Transport-Klassifizierung (c), an den lernfähigen Algorithmus (36) zu übermitteln.

23. Lager- und Kommissioniersystem (1) nach Anspruch 22, **gekennzeichnet durch** eine mobile Datenerfassungseinheit (38) der Überwachungs- und Klassifizierungseinheit (32), welche dazu eingerichtet ist, die dem Stückgut (18) zugeordneten Stückgut-Eigenschaften (a) aus dem auf dem Stückgut (18) angeordneten Datenspeicher (31) auszulesen oder die auf dem Stückgut (18) angeordnete Identifikation (e) zu ermitteln.

24. Lager- und Kommissioniersystem (1) nach einem der Ansprüche 20 bis 23, **dadurch gekennzeichnet, dass** das Stückgut (18) ein mit Waren (16c) beladenes Ladehilfsmittel (17a..17g) ist und das Lager- und Kommissioniersystem (1) eine Umladestation (20) zum Umladen von Waren (16c) aus einem Ladehilfsmittel (17a) in ein anderes Ladehilfsmittel (17b) aufweist.

25. Lager- und Kommissioniersystem (1) nach Anspruch 24, **dadurch gekennzeichnet, dass**
- das Lager- und Kommissioniersystem (1) einen Lagerbereich (8a..8e) mit Lagerplätzen zum Lagern von Stückgütern (18) umfasst,
- die Stückgut-Messeinrichtung (19) im Verlauf der Fördertechnik (9) angeordnet ist und die Fördertechnik (9) die Umladestation (20) mit dem Lagerbereich (8a..8e) fördertechnisch verbindet, und
- die Fördertechnik (9) eine Umlenkvorrichtung (23) aufweist, welche dazu eingerichtet ist, die Stückgüter (18) abhängig von der Wahrscheinlichkeit für das Auftreten einer Störung direkt zum Lagerbereich (8a..8e) oder zur Umladestation (20) zu transportieren.

## Claims

1. A method for predicting and/or averting a future disruption in a picking system (1), comprising the steps:
a) determining, with a unit load measurement means (19) of the picking system (1), unit load properties (a) of a unit load (18) to be transported with a conveying system (9) of the picking system (1),
b) issuing, with an output unit (37) of the picking system (1), a probability of the occurrence of a disruption based on the determined unit load properties (a) and/or initiating, with a control (35) of the picking system (1), a measure which reduces the probability of the occurrence of this disruption if the occurrence of a disruption is probable, based on the determined unit load properties (a),
c) storing the determined unit load properties (a) in a data store (31) assigned to the unit load (18),
d) transporting the unit load (18) with the conveying system (9) of the picking system (1),
e) monitoring the transport of this unit load (18) by means of a monitoring and classification unit (32) of the picking system (1) and classifying the transport as disrupted if a disruption is detected by means of the monitoring and classification unit (32) during the transport of this unit load (18), or classifying the transport as disruption-free by means of the monitoring and classification unit (32) if no disruption is detected by means of the monitoring and classification unit (32) during the transport of this unit load (18) within a specifiable observation period,
f) feeding the stored unit load properties (a) and the transport classification (c) of the transport of the unit load (18) determined in step e) into a learning algorithm (36), and
g) repeating steps a) to f) for a plurality of unit loads (18) and computing, with the help of the learning algorithm (36), a probability of the occurrence of a disruption during the transport of the various unit loads (18) for which steps a) to f) are run through, depending on their unit load properties (a).

2. The method according to claim 1, **characterized in that** step b) is only executed after a plurality of run-throughs of steps a) and c) to f).

3. The method according to claim 1 or 2, **characterized in that** the unit load (18) is a loading aid (17a.. 17g) loaded with articles (16c) and the measure initiated in step b) consists in reloading the articles (16c) contained in the loading aid (17a) into another loading aid (17b), or initiating such a reloading, and subsequently continuing with step a) or transporting the other loading aid (17b) on the conveying system (9) of the picking system (1) without running through steps a) to g).

4. The method according to any one of the claims 1 to 3, **characterized in that** a disruption location (A) at which a disruption occurs is captured in step e), fed into the learning algorithm (36) in step f) and taken into account in steps b) and g) in the sense that the disruption probability (d) of the occurrence of a disruption during the transport of the unit loads (18) is specified depending on the unit load properties (a) of a unit load (18) and depending on the disruption location (A).

5. The method according to claim 4, **characterized in that** the measure initiated in step b) consists in transporting the unit load (18) on the conveying system (9) of the picking system (1) whilst bypassing the predicted disruption location (A).

6. The method according to claim 5, **characterized in that** the unit load (18) is a loading aid (17a..17g) loaded with articles (16c) and the measure initiated in step b) consists in
i) transporting the unit load (18) on the conveying system (9) of the picking system (1) whilst bypassing the predicted disruption location (A) if this is possible, or
ii) reloading the articles (16c) contained in the loading aid (17a) into another loading aid (17b) and subsequently continuing with step a) or transporting the other loading aid (17b) on the conveying system (9) of the picking system (1) without running through steps a) to g) if step i) is not possible.

7. The method according to claim 4, **characterized in that** the measure initiated in step b) consists in changing an operating parameter (b) of the conveying system (9) at the predicted disruption location (A).

8. The method according to claim 7, **characterized in that** the unit load (18) is a loading aid (17a..17g) loaded with articles (16c) and the measure initiated in step b) consists in
i) changing an operating parameter (b) of the conveying system (9) at the predicted disruption location (A) if this is possible, or
ii) reloading the articles (16c) contained in the loading aid (17a) into another loading aid (17b) and subsequently continuing with step a) or transporting the other loading aid (17b) on the conveying system (9) of the picking system (1) without running through steps a) to g) if step i) is not possible.

9. The method according to claims 6 and 8, **characterized in that** the unit load (18) is a loading aid (17a.. 17g) loaded with articles (16c) and the measure initiated in step b) consists in
i) transporting the unit load (18) on the conveying system (9) of the picking system (1) whilst bypassing the predicted disruption location (A) if this is possible, or
ii) changing an operating parameter (b) of the conveying system (9) at the predicted disruption location (A) if this is possible, or
iii) reloading the articles (16c) contained in the loading aid (17a) into another loading aid (17b) and subsequently continuing with step a) or transporting the other loading aid (17b) on the conveying system (9) of the picking system (1) without running through steps a) to g) if step i) is not possible.

10. The method according to any one of the claims 5 to 9, **characterized in that** step f) is skipped for those unit loads (18) for which the measure initiated in step b), in claims 5, 6 or 9, consists in transporting the unit load (18) on the conveying system (9) of the picking system (1) whilst bypassing the predicted disruption location (A), or for which the measure initiated in step b), in claims 7 to 9, consists in changing an operating parameter (b) of the conveying system (9) at the predicted disruption location (A).

11. The method according to any one of the claims 1 to 10, **characterized in that** an operating mode of the conveying system (9) at a disruption location (A) at which a disruption occurs is acquired in step e), fed into the learning algorithm (36) in step f) and taken into account in steps b) and g) in the sense that the disruption probability (d) of the occurrence of a disruption during the transport of the unit loads (18) is specified depending on the unit load properties (a) of a unit load (18), depending on the disruption location (A) and depending on the operating mode at the disruption location (A).

12. The method according to claim 11, **characterized in that** a bypassing of the predicted disruption location (A) on the conveying system (9) of the picking system (1) during the transport of the unit load (18) or a changing of an operating parameter (b) of the conveying system (9) at the predicted disruption location (A) is only initiated if a disruption is probable for the operating mode which is in effect at the predicted disruption location (A).

13. The method according to any one of the claims 1 to 12, **characterized in that** a disruption time which elapsed from the point in time where the unit load (18) is handed over onto the conveying system (9) up to the occurrence of a disruption and/or a disruption path traveled by the unit load (18) on the conveying system (9) up to the occurrence of a disruption is acquired in step e), fed into the learning algorithm (36) in step f) and taken into account in steps b) and g) in the sense that the disruption probability (d) of the occurrence of a disruption during the transport of the unit loads (18) is specified depending on the unit load properties (a) of a unit load (18) and depending on the disruption time and/or the disruption path.

14. The method according to any one of the claims 1 to 12, **characterized in that** steps b), e), f) and g) are executed independent of a disruption time elapsed from the point in time where the unit load (18) is handed over onto the conveying system (9) up to the occurrence of a disruption and/or independent of a disruption path traveled by the unit load (18) on the conveying system (9) up to the occurrence of a disruption.

15. The method according to any one of the claims 1 to 14, **characterized in that** the unit load properties (a) are one or multiple properties from the group: weight of the unit load (18), dimensions of the unit load (18), deviation of the unit load (18) from a target shape (B), surface quality of the unit load (18).

16. The method according to any one of the claims 1 to 15, **characterized in that** steps a) to g) are run through multiple times for one and the same unit load (18).

17. The method according to any one of the claims 1 to 16, **characterized in that** a measure based on the probability of the occurrence of a disruption is initiated in step b) if said disruption probability (d) is above a specifiable threshold value.

18. The method according to any one of the claims 1 to 17, **characterized in that** the monitoring and classification unit (32)
- reads out the unit load properties (a) assigned to the unit load (18) from the data store (31) arranged on the unit load (18) and transmits the unit load properties (a), together with the transport classification (c) determined in step e), to the learning algorithm (36), or
- detects an identification (e) arranged on the unit load (18), reads out the unit load properties (a) assigned to the identification (e) from the data store (31) and transmits the unit load properties (a), together with the transport classification (c) determined in step e), to the learning algorithm (36).

19. The method according to claim 18, **characterized in that** the unit load properties (a) assigned to the unit load (18) are read out from the data store (31) arranged on the unit load (18) by means of a mobile data acquisition unit (38) of the monitoring and classification unit (32), or the identification (e) arranged on the unit load (18) is determined by means of a mobile data acquisition unit (38) of the monitoring and classification unit (32).

20. A picking system (1), comprising
- a conveying system (9) for transporting a unit load (18),
- a unit load measurement means (19) for determining unit load properties (a) of the unit load (18),
- a writing means (30) for storing the unit load properties (a) in a data store (31) assigned to the unit load (18) and a reading means (39) for reading out the unit load properties (a) from the data store (31) or a combined writing and reading means (30, 39) for storing the unit load properties (a) in a data store (31) assigned to the unit load (18) and for reading out the unit load properties (a) from the data store (31),
- an output unit (37) for issuing a probability of the occurrence of a disruption and/or a control (35) for initiating a measure which reduces the probability of the occurrence of this disruption if the occurrence of a disruption is probable, based on the respective determined unit load properties (a),
- a monitoring and classification unit (32), which is adapted to detect a disruption during the transport of the unit load (18) and then classify the transport of the unit load (18) as disrupted, or classify the transport as disruption-free if no disruption was detected by means of the monitoring and classification unit (32) during the transport of this unit load (18) within a specifiable observation period, and
- a learning algorithm (36), into which stored unit load properties (a) and a transport classification (c) of the transport of the unit load (18) can be fed and which is configured to compute a probability of the occurrence of a disruption during the transport of various unit loads (18), depending on their unit load properties (a).

21. The picking system (1) according to claim 20, **characterized by** a data store (31) assigned to the unit load (18) for storing the determined unit load properties (a).

22. The picking system (1) according to claim 20 or 21, **characterized in that** the monitoring and classification unit (32) is adapted to
- read out the unit load properties (a) assigned to the unit load (18) from the data store (31) arranged on the unit load (18) and transmit the unit load properties (a), together with the transport classification (c), to the learning algorithm (36), or
- detect an identification (e) arranged on the unit load (18), read out the unit load properties (a) assigned to the identification (e) from the data store (31) and transmit the unit load properties (a), together with the transport classification (c), to the learning algorithm (36).

23. The picking system (1) according to claim 22, **characterized by** a mobile data acquisition unit (38) of the monitoring and classification unit (32), which is adapted to read out the unit load properties (a) assigned to the unit load (18) from the data store (31) arranged on the unit load (18) or detect the identification (e) arranged on the unit load (18).

24. The picking system (1) according to any one of the claims 20 to 23, **characterized in that** the unit load (18) is a loading aid (17a..17g) loaded with articles (16c) and the picking system (1) comprises a reloading station (20) for reloading articles (16c) from a loading aid (17a) into another loading aid (17b).

25. The picking system (1) according to claim 24, **characterized in that**
- the picking system (1) comprises a storage zone (8a..8e) with storage locations for storing unit loads (18),
- the unit load measurement means (19) is arranged along the route of the conveying system (9) and the conveying system (9) connects, in terms of conveyance, the reloading station (20) with the storage zone (8a..8e), and
- the conveying system (9) has a deflection device (23), which is adapted to transport the unit loads (18) directly to the storage zone (8a..8e) or to the reloading station (20), depending on the probability of the occurrence of a disruption.

## Revendications

1. Procédé de prédiction et/ou de prévention d'un dysfonctionnement futur dans un système de stockage et de prélèvement (1), comprenant les étapes suivantes :
a) détermination des propriétés d'article (a) d'un article (18) à transporter avec un système de convoyage (9) du système de stockage et de prélèvement (1), avec un dispositif de mesure d'article (19) du système de stockage et de prélèvement (1),
b) sortie d'une probabilité d'apparition d'un dysfonctionnement sur la base des propriétés d'article (a) déterminées avec une unité de sortie (37) du système de stockage et de prélèvement (1) et/ou l'application d'une mesure qui réduit la probabilité d'apparition de ce dysfonctionnement, avec une commande (35) du système de stockage et de prélèvement (1), lorsque l'apparition d'un dysfonctionnement est probable, sur la base des propriétés d'article (a) déterminées,
c) enregistrement des propriétés d'article (a) dans une mémoire de données (31) correspondant à l'article (18),
d) transport de l'article (18) avec le système de convoyage (9) du système de stockage et de prélèvement (1),
e) surveillance du transport de cet article (18) par une unité de surveillance et de classification (32) du système de stockage et de prélèvement (1) et classification du transport comme défaillant si un dysfonctionnement lors du transport de cet article (18) est constaté par l'unité de surveillance et de classification (32) ou classification du transport par l'unité de surveillance et de classification (32) comme exempt de dysfonctionnement lorsque, dans une période d'observation prédéterminée, aucun dysfonctionnement n'est constaté lors du transport de cet article (18) par l'unité de surveillance et de classification (32),
f) introduction des propriétés d'article (a) enregistrées et de la classification de transport (c) déterminée à l'étape e) du transport de l'article (18) dans un algorithme capable d'apprentissage (36) et
g) répétition des étapes a) à f) pour une pluralité d'articles (18) et calcul d'une probabilité d'apparition d'un dysfonctionnement lors du transport des différents articles (18) pour lesquels les étapes a) à f) sont exécutées, en fonction de leurs propriétés d'articles (a), à l'aide de l'algorithme capable d'apprentissage (36).

2. Procédé selon la revendication 1, **caractérisé en ce que** l'étape b) n'est exécutée qu'après une pluralité d'exécutions des étapes a) et c) à f).

3. Procédé selon la revendication 1 ou 2, **caractérisé en ce que** l'article (18) est un équipement de chargement (17a... 17g) chargé avec des marchandises (16c) et la mesure appliquée à l'étape b) consiste à transférer les marchandises (16c) contenues dans l'équipement de chargement (17a) vers un autre équipement de chargement (17b) ou à initier un tel transfert et à continuer, par la suite, avec l'étape a) ou à transporter l'autre équipement de chargement (17b) sans exécuter les étapes a) à g) sur le système de convoyage (9) du système de stockage et de prélèvement (1).

4. Procédé selon l'une des revendications 1 à 3, **caractérisé en ce qu'**un lieu de dysfonctionnement (A), au niveau duquel un dysfonctionnement apparaît, est déterminé à l'étape e), introduit, à l'étape f), dans l'algorithme capable d'apprentissage (36) et, dans les étapes b) et g), on prend en compte le fait que la probabilité de dysfonctionnement (d) pour l'apparition d'un dysfonctionnement lors du transport des articles (18) est indiquée en fonction des propriétés d'article (a) d'un article (18) et en fonction du lieu du dysfonctionnement (A).

5. Procédé selon la revendication 4, **caractérisé en ce que** la mesure initiée à l'étape b) consiste à transporter l'article (18) sur le système de convoyage (9) du système de stockage et de prélèvement (1) en contournant le lieu de dysfonctionnement (A) prédit.

6. Procédé selon la revendication 5, **caractérisé en ce que** l'article (18) est un équipement de chargement (17a... 17g) chargé avec des marchandises (16c) et la mesure initiée à l'étape b) consiste
i) à transporter l'article (18) sur le système de convoyage (9) du système de stockage et de prélèvement (1) en contournant le lieu de dysfonctionnement (A) lorsque cela est possible ou
ii) à transférer les marchandises (16c) contenues dans l'équipement de chargement (17a) vers un autre équipement de chargement (17b) et continuer, par la suite, avec l'étape a) ou à transporter l'autre équipement de chargement (17b) sans exécuter les étapes a) à g) sur le système de convoyage (9) du système de stockage et de prélèvement (1), lorsque l'étape i) n'est pas possible.

7. Procédé selon la revendication 4, **caractérisé en ce que** la mesure initiée à l'étape b) consiste à modifier un paramètre de fonctionnement (b) du système de convoyage (9) au niveau du lieu de dysfonctionnement (A) prédit.

8. Procédé selon la revendication 7, **caractérisé en ce que** l'article (18) est un équipement de chargement (17a... 17g) chargé avec des marchandises (16c) et la mesure initiée à l'étape b) consiste
i) à modifier un paramètre de fonctionnement (b) du système de convoyage (9) au niveau du lieu de dysfonctionnement (A) prédit, lorsque cela est possible ou
ii) à transférer les marchandises (16c) contenues dans l'équipement de chargement (17a) vers un autre équipement de chargement (17b) et continuer, par la suite, avec l'étape a) ou à transporter l'autre équipement de chargement (17b) sans exécuter les étapes a) à g) sur le système de convoyage (9) du système de stockage et de prélèvement (1), lorsque l'étape i) n'est pas possible.

9. Procédé selon la revendication 6 et 8, **caractérisé en ce que** l'article (18) est un équipement de chargement (17a... 17g) chargé avec des marchandises (16c) et la mesure initiée à l'étape b) consiste
i) à transporter l'article (18) sur le système de convoyage (9) du système de stockage et de prélèvement (1) en contournant le lieu de dysfonctionnement (A) prédit lorsque cela est possible ou
ii) à modifier un paramètre de fonctionnement (b) du système de convoyage (9) au niveau du lieu de dysfonctionnement (A) prédit, lorsque cela est possible ou
iii) à transférer les marchandises (16c) contenues dans l'équipement de chargement (17a) vers un autre équipement de chargement (17b) et continuer, par la suite, avec l'étape a) ou à transporter l'autre équipement de chargement (17b) sans exécuter les étapes a) à g) sur le système de convoyage (9) du système de stockage et de prélèvement (1), lorsque l'étape i) n'est pas possible.

10. Procédé selon l'une des revendications 5 à 9, **caractérisé en ce que** l'étape f) est sautée pour les articles (18) pour lesquels la mesure initiée à l'étape b) dans les revendications 5, 6 ou 9 consiste à transporter l'article (18) sur le système de convoyage (9) du système de stockage et de prélèvement (1) en contournant le lieu de dysfonctionnement (A) prédit ou pour lesquels la mesure initiée à l'étape b) dans les revendications 7 à 9 consiste à modifier un paramètre de fonctionnement (b) du système de convoyage (9) au niveau du lieu de dysfonctionnement (A) prédit.

11. Procédé selon l'une des revendications 1 à 10, **caractérisé en ce qu'**un état de fonctionnement du système de convoyage (9) au niveau d'un lieu de dysfonctionnement (A), au niveau duquel un dysfonctionnement apparaît, est mesuré à l'étape e), introduit, à l'étape f), dans l'algorithme capable d'apprentissage (36) et, dans les étapes b) et g), il est tenu compte du fait que la probabilité de dysfonctionnement (d) pour l'apparition d'un dysfonctionnement lors du transport des articles (18) est indiquée en fonction des propriétés d'articles (a) d'un article (18), en fonction du lieu de dysfonctionnement (A) et en fonction de l'état de fonctionnement au niveau du lieu de dysfonctionnement (A).

12. Procédé selon la revendication 11, **caractérisé en ce qu'**un contournement du lieu de dysfonctionnement (A) prédit sur le système de convoyage (9) du système de stockage et de prélèvement (1) lors du transport de l'article (18) ou une modification d'un paramètre de fonctionnement (b) du système de convoyage (9) au niveau du lieu de dysfonctionnement (A) prédit n'est effectué que lorsque, pour l'état de fonctionnement existant au niveau du lieu de dysfonctionnement (A) prédit, un dysfonctionnement est probable.

13. Procédé selon l'une des revendications 1 à 12, **caractérisé en ce qu'**un temps de dysfonctionnement écoulé à partir du moment du transfert de l'article (18) sur le système de convoyage (9) jusqu'à l'apparition d'un dysfonctionnement et/ou une course de dysfonctionnement parcourue par l'article (18) sur le système de convoyage (9) jusqu'à l'apparition d'un dysfonctionnement est mesuré à l'étape e), introduit dans l'algorithme capable d'apprentissage (36) à l'étape f) et, dans les étapes b) et g), il est tenu compte du fait que la probabilité de dysfonctionnement (d) pour l'apparition d'un dysfonctionnement lors du transport des articles (18) est indiquée en fonction des propriétés d'article (a) d'un article (18) et en fonction du temps de dysfonctionnement et/ou de la course de dysfonctionnement.

14. Procédé selon l'une des revendications 1 à 12, **caractérisé en ce que** les étapes b), e), f) et g) sont exécutées indépendamment d'un temps de dysfonctionnement écoulé à partir du moment du transfert de l'article (18) sur le système de convoyage (9) jusqu'à l'apparition d'un dysfonctionnement et/ou indépendamment d'une course de dysfonctionnement parcourue par l'article (18) sur le système de convoyage (9) jusqu'à l'apparition d'un dysfonctionnement.

15. Procédé selon l'une des revendications 1 à 14, **caractérisé en ce que** les propriétés d'article (a) sont une ou plusieurs propriétés du groupe : poids de l'article (18), dimensions de l'article (18), écart de l'article (18) par rapport à une forme de consigne (B), qualité de surface de l'article (18).

16. Procédé selon l'une des revendications 1 à 15, **caractérisé en ce que** les étapes a) à g) sont exécutée plusieurs fois pour un seul et même article (18).

17. Procédé selon l'une des revendications 1 à 16, **caractérisé en ce qu'**une mesure basée sur la probabilité d'apparition d'un dysfonctionnement est initiée à l'étape b) lorsque ladite probabilité de dysfonctionnement (d) se trouve au-dessus d'une valeur seuil prédéterminée.

18. Procédé selon l'une des revendications 1 à 17, **caractérisé en ce que** l'unité de surveillance et de classification (32)
- lit les propriétés d'article (a) correspondant à l'article (18), provenant de la mémoire de données (31) disposée sur l'article (18) et transmet les propriétés d'article (a) conjointement avec la classification de transport (c) déterminée à l'étape e) à l'algorithme capable d'apprentissage (36) ou
- détermine une identification (e) disposée sur l'article (18), qui lit les propriétés d'article (a) correspondant à l'identification (e) dans la mémoire de données (31) et transmet les propriétés d'article (a) conjointement avec la classification de transport (c) déterminée à l'étape e) à l'algorithme capable d'apprentissage (36).

19. Procédé selon la revendication 18, **caractérisé en ce que** les propriétés d'article (a) correspondant à l'article (18) sont lues dans la mémoire de données (31) disposée sur l'article (18) à l'aide d'une unité de saisie de données mobile (38) de l'unité de surveillance et de classification (32) ou l'identification (e) disposée sur l'article (18) est déterminée par une unité de saisie de données mobile (38) de l'unité de surveillance et de classification (32).

20. Système de stockage et de prélèvement (1) comprenant
- un système de convoyage (9) pour le transport d'un article (18),
- un dispositif de mesure d'article (19) pour la détermination des propriétés d'article (a) de l'article (18),
- un dispositif d'écriture (30) pour l'enregistrement des propriétés d'article (a) dans une mémoire de données (31) correspondant à l'article (18) et un dispositif de lecture (39) pour la lecture des propriétés d'article (a) dans la mémoire de données (31) ou un dispositif combiné d'écriture et de lecture (30, 39) pour l'enregistrement des propriétés d'article (a) dans une mémoire de données (31) correspondant à l'article (18) et pour la lecture des propriétés d'article (a) dans la mémoire de données (31),
- une unité de sortie (37) pour la sortie d'une probabilité d'apparition d'un dysfonctionnement et/ou une commande (35) pour l'application d'une mesure qui réduit la probabilité d'apparition de ce dysfonctionnement lorsque l'apparition d'un dysfonctionnement est probable, respectivement sur la base des propriétés d'article (a) déterminée,
- une unité de surveillance et de classification (32) qui est conçue pour constater un dysfonctionnement lors du transport de l'article (18) puis pour classifier le transport de l'article (18) comme défaillant ou pour classifier le transport comme exempt de défaillance lorsque, dans une période d'observation prédéterminée, aucun dysfonctionnement n'a été constaté lors du transport de cet article (18) par l'unité de surveillance et de classification (32) et
- un algorithme capable d'apprentissage (36), dans lequel les propriétés d'article (a) enregistrées et une classification de transport (c) du transport de l'article (18) peuvent être introduites et qui est conçu pour calculer une probabilité d'apparition d'un dysfonctionnement lors du transport de différents articles (18) en fonction de leurs propriétés d'articles (a).

21. Système de stockage et de prélèvement (1) selon la revendication 20, **caractérisé par** une mémoire de données (31) correspondant à l'article (18) pour l'enregistrement des propriétés d'article (a) déterminées.

22. Système de stockage et de prélèvement (1) selon la revendication 20 ou 21, **caractérisé en ce que** l'unité de surveillance et de classification (32) est conçu
- pour lire les propriétés d'article (a) correspondant à l'article (18) dans la mémoire de données (31) disposée sur l'article (18) et pour transmettre les propriétés d'article (a) conjointement avec la classification de transport (c) à l'algorithme capable d'apprentissage (36) ou
- pour déterminer une identification (e) disposée sur l'article (18), pour lire les propriétés d'article (a) correspondant à l'identification (e) dans la mémoire de données (31) et pour transmettre les propriétés d'article (a) conjointement avec la classification de transport (c) à l'algorithme capable d'apprentissage (36).

23. Système de stockage et de prélèvement (1) selon la revendication 22, **caractérisé par** une unité de saisie de données mobile (38) de l'unité de surveillance et de classification (32), qui est conçue pour lire les propriétés d'article (a) correspondant à l'article (18) dans la mémoire de données (31) disposée sur l'article (18) ou pour déterminer l'identification (e) disposée sur l'article (18).

24. Système de stockage et de prélèvement (1) selon l'une des revendications 20 à 23, **caractérisé en ce que** l'article (18) est un équipement de chargement (17a... 17g) chargé avec des marchandises (16c) et le système de stockage et de prélèvement (1) comprend une station de transfert (20) pour le transfert de marchandises (16c) d'un équipement de chargement (17a) vers un autre équipement de chargement (17b).

25. Système de stockage et de prélèvement (1) selon la revendication 24, **caractérisé en ce que**
- le système de stockage et de prélèvement (1) comprend une zone de stockage (8a... 8e) avec des emplacements de stockage pour le stockage d'articles (18),
- le dispositif de mesure d'articles (19) est disposé sur le parcours du système de convoyage (9) et le système de convoyage (9) relie la station de transfert (20) avec la zone de stockage (8a... 8e) et
- le système de convoyage (9) comprend un dispositif de déviation (23) qui est conçu pour transporter les articles (18), en fonction de la probabilité d'apparition d'un dysfonctionnement, directement vers la zone de stockage (8a..., 8e) ou vers la station de transfert (20).
